# EUROPEAN PATENT APPLICATION

(11) **EP 3 263 753 A1**
(43) Date of publication of application: **03.01.2018**
(21) Application number: 16755568.9
(22) Date of filing: 24.02.2016
(51) Int. Cl.: D02G 3/38, D02G 3/16

(54) **METHOD FOR MANUFACTURING CARBON NANOTUBE FIBER, DEVICE FOR MANUFACTURING CARBON NANOTUBE FIBER, AND CARBON NANOTUBE FIBER**

(30) Priority: 27.02.2015 JP 2015038368; 27.02.2015 JP 2015038371
(71) Applicant: Hitachi Zosen Corporation, Osaka-shi, Osaka 559-8559 (JP)
(72) Inventor: INOUE, Tetsuya, Osaka-shi Osaka 559-8559 (JP); MORIHARA, Norifumi, Osaka-shi Osaka 559-8559 (JP); YAMASHITA, Tomoya, Osaka-shi Osaka 559-8559 (JP)
(74) Representative: Grünecker Patent- und Rechtsanwälte PartG mbB
(86) International application number: PCT/JP2016/055479
(87) International publication number: WO 2016/136824

(57) **Abstract**

A method for manufacturing a carbon nanotube fiber (1), the method comprising: preparing a core material (2) extending in a predetermined direction; preparing a carbon nanotube array (13) comprising a plurality of carbon nanotubes (12) aligned on a substrate (8) and oriented vertically to the substrate (8); preparing a carbon nanotube untwisted yarn (3) comprising the plurality of continuously connected carbon nanotubes (12) by drawing the carbon nanotube untwisted yarn from the carbon nanotube array (13); and winding the carbon nanotube untwisted yarn (3) around the core material (2).

## Description

### TECHNICAL FIELD

The present invention relates to a method for manufacturing a carbon nanotube fiber, an apparatus for manufacturing a carbon nanotube fiber, and a carbon nanotube fiber.

### BACKGROUND ART

A carbon nanotube yarn comprising a plurality of continuous carbon nanotubes has been studied as a material used in various industrial products, such as a textile, a conductive line material, etc.

One example of a method for manufacturing a carbon nanotube yarn includes: drawing, from an array of carbon nanotubes grown on a substrate, a plurality of carbon nanotube sheets in a sheet form, in which a plurality of carbon nanotubes are arranged in one direction and are continuously connected; stacking the plurality of carbon nanotube sheets; and then twisting and extending the stacked sheets to form a carbon nanotube twisted yarn (see, for example, Patent Document 1).

Such a carbon nanotube yarn is required to have mechanical properties, electrical properties, etc., according to its intended application.

However, in some cases, a carbon nanotube yarn alone may not sufficiently ensure the required mechanical properties, electrical properties, etc. Therefore, the combinations of a carbon nanotube yarn with another material have been studied in order the carbon nanotube yarn to have the required properties.

For example, a carbon nanotube fiber comprising a yarn material inserted into the center thereof has been proposed (see, for example, Patent Document 2).

Patent Document 1: Japanese Patent Application Publication No. 2011-208296
Patent Document 2: Japanese Patent Application Publication No. 2014-169521

### SUMMARY

### OBJECTS OF THE INVENTION

However, the method for manufacturing carbon nanotube twisted yard according to Patent Document 1 has limited room for improving the density of the carbon nanotube twisted yarn because many carbon nanotubes are collectively twisted and extended. Therefore, such a carbon nanotube twisted yarn may not ensure sufficient mechanical properties according to its intended use.

Also, the carbon nanotube fiber according to Patent Document 2 may not ensure sufficiently improved mechanical properties because a yarn material is merely inserted into the center of the carbon nanotube fiber.

The carbon nanotube fiber according to Patent Documents 2 is prepared by preparing a plurality of dies having fine pores, and allowing both the carbon nanotube and a yarn material to pass the fine pores of the plurality of dies. However, it is very complicated to allow both the carbon nanotube and the yarn material to pass the fine pores of the dies.

Further, such a method may not achieve well-balanced properties of the yarn material and the carbon nanotube because it is difficult to precisely locate the yarn material at the center of the carbon nanotube fiber.

Accordingly, an object of the present invention is to provide a carbon nanotube fiber, a method for manufacturing a carbon nanotube fiber, and an apparatus for manufacturing a carbon nanotube fiber that are simple and improve the mechanical properties.

Further, another object of the present invention is to provide a carbon nanotube composite fiber, a method for manufacturing a carbon nanotube composite fiber, and an apparatus for manufacturing a carbon nanotube composite fiber that are simple and improve the mechanical properties and achieve the well-balanced properties of the core material and the carbon nanotube yarn.

### MEANS FOR ACHIEVING THE OBJECTS

The first aspect of the present invention includes a method for manufacturing a carbon nanotube fiber, the method comprising the steps of: preparing a core material extending in a predetermined direction; preparing a carbon nanotube array comprising a plurality of carbon nanotubes aligned on a substrate and oriented vertically to the substrate; drawing from the carbon nanotube array a carbon nanotube untwisted yarn comprising the plurality of continuously connected carbon nanotubes ; and winding the carbon nanotube untwisted yarn around the core material.

Such a method may be simple and may improve the mechanical property of the carbon nanotube fiber because the carbon nanotube untwisted yarn is wound around the core material.

Further, in the carbon nanotube fiber, the core material is reliably located at the central part, and the carbon nanotube untwisted yarn is located around the core material. Therefore, in the carbon nanotube fiber, the core material and the carbon nanotube untwisted yarn may be well-balancedly located.

As a result, in addition to further improving the mechanical properties of the carbon nanotube fiber, the carbon nanotube fiber may have well-balanced properties of the core material and the carbon nanotube untwisted yarn.

The second aspect of the present invention includes a method for manufacturing a carbon nanotube fiber, wherein the method comprises the steps of: preparing a plurality of carbon nanotube arrays each comprising a plurality of carbon nanotubes which are aligned on a substrate and are oriented vertically to the substrate; preparing a carbon nanotube central yarn by drawing a plurality of carbon nanotube untwisted yarns each comprising a plurality of continuously connected carbon nanotubes from at least one carbon nanotube array of the plurality of carbon nanotube arrays and then bundling the plurality of carbon nanotube untwisted yarns; and drawing a carbon nanotube untwisted yarn comprising a plurality of continuously connected carbon nanotubes from at least one carbon nanotube array of the plurality of carbon nanotube arrays and then winding the carbon nanotube untwisted yarn around the carbon nanotube central yarn.

According to such a method, the carbon nanotube central yarn is prepared by bundling a plurality of carbon nanotube untwisted yarns, and then a carbon nanotube untwisted yarn is wound around the carbon nanotube central yarn. Therefore, the method may be simple and may improve the density of the carbon nanotube fiber.

Further, in the carbon nanotube fiber, the carbon nanotube central yarn is reliably located at the central part, and the carbon nanotube untwisted yarn is located around the carbon nanotube central yarn. Therefore, in the carbon nanotube fiber, the carbon nanotube central yarn and the carbon nanotube untwisted yarn may be well-balancedly located.

That is, the mechanical properties of the carbon nanotube fiber may be reliably improved because the carbon nanotube central yarn and the carbon nanotube untwisted yarn are located well-balancedly while the density of the carbon nanotube fiber may be improved.

Further, each of the plurality of carbon nanotubes in the carbon nanotube untwisted yarn is oriented along the feeding direction of the carbon nanotube untwisted yarn because the carbon nanotube untwisted yarn is drawn from a plurality of carbon nanotubes oriented vertically to the substrate.

Therefore, the orientation of the carbon nanotubes is reliably ensured both in the carbon nanotube central yarn comprising a plurality of bundled carbon nanotube untwisted yarns and in the carbon nanotube untwisted yarn wound around the carbon nanotube central yarn. Accordingly, the orientation of the carbon nanotubes is reliably ensured in the carbon nanotube fiber.

The third aspect of the present invention includes the method for manufacturing a carbon nanotube fiber according to the second aspect, wherein in the step of preparing a carbon nanotube central yarn, the carbon nanotube central yarn is prepared as a twisted yarn by twisting the plurality of carbon nanotube untwisted yarns.

According to such a method, the density of the carbon nanotube central yarn is reliably improved because the carbon nanotube central yarn is prepared as a twisted yarn, and thereby the density of the carbon nanotube fiber is reliably improved.

The fourth aspect of the present invention includes the method for manufacturing a carbon nanotube fiber according to the third aspect, wherein in the step of winding the carbon nanotube untwisted yarn around the carbon nanotube central yarn, the carbon nanotube untwisted yarn is wound around the carbon nanotube central yarn such that the carbon nanotube untwisted yarn is extending along a twist direction of the carbon nanotube central yarn.

According to such a method, the twist direction of the carbon nanotube untwisted yarn constituting the carbon nanotube central yarn and the winding direction of the carbon nanotube untwisted yarn wound around the carbon nanotube central yarn are the same, because the carbon nanotube untwisted yarn is wound around the carbon nanotube central yarn along the twist direction of the carbon nanotube central yarn.

Therefore, the orientation direction of the carbon nanotube of the carbon nanotube central yarn and the orientation direction of the carbon nanotube of the carbon nanotube untwisted yarn are the same. Thus, in the carbon nanotube fiber, the orientation of the carbon nanotube may be more reliably ensured.

The fifth aspect of the present invention includes the method for manufacturing a carbon nanotube fiber according to any one of the second to fourth aspects, wherein the step of preparing the carbon nanotube array comprises the steps of: locating a catalyst layer on the substrate; and growing the plurality of carbon nanotubes from the catalyst layer by supplying a source gas to the substrate.

According to such a method, a plurality of carbon nanotubes may reliably be oriented vertically to the substrate because the plurality of carbon nanotubes are grown from the catalyst layer located on the substrate. Accordingly, the carbon nanotube array may be reliably prepared.

The sixth aspect of the present invention includes the method for manufacturing a carbon nanotube fiber according to any one of the second to fifth aspects, wherein in the step of winding the carbon nanotube untwisted yarn around the carbon nanotube central yarn, a plurality of carbon nanotube untwisted yarns are drawn from the carbon nanotube array, and then at least two carbon nanotube untwisted yarns of the plurality of carbon nanotube untwisted yarns are spirally wound around the carbon nanotube central yarn such that twist directions of said at least two carbon nanotube untwisted yarns are different from each other.

According to such a method, at least two carbon nanotube untwisted yarns of the plurality of carbon nanotube untwisted yarns are spirally wound around the carbon nanotube central yarn such that the winding directions of said at least two carbon nanotube untwisted yarns are different from each other. Therefore, in the carbon nanotube fiber, the carbon nanotubes of the carbon nanotube untwisted yarn may be oriented in at least two directions. As a result, the electrical properties of the carbon nanotube fiber may be suitably adjusted.

The seventh aspect of the present invention includes the method for manufacturing a carbon nanotube fiber according to any one of the second to sixth aspects, wherein in the step of preparing a carbon nanotube central yarn, a volatile organic solvent is applied to the carbon nanotube central yarn.

According to such a method, a volatile organic solvent is applied to the carbon nanotube central yarn before the carbon nanotube untwisted yarn is wound around the carbon nanotube central yarn. Then the carbon nanotube untwisted yarn is wound around the carbon nanotube central yarn to which the volatile organic solvent is applied.

Then the plurality of carbon nanotube untwisted yarns of the carbon nanotube central yarn and the carbon nanotube untwisted yarn wound around the carbon nanotube central yarn aggregate with each other due to the evaporation of the volatile organic solvent.

Therefore, the density of the carbon nanotube fiber may be further improved and the mechanical properties of the carbon nanotube fiber may be much more reliably improved.

The eighth aspect of the present invention includes the method for manufacturing a carbon nanotube fiber according to any one of the second to seventh aspects, wherein in the step of winding the carbon nanotube untwisted yarn around the carbon nanotube central yarn, the carbon nanotube central yarn and the carbon nanotube untwisted yarn are each immersed in a metal-containing solution containing a metal and then dried, or a metal is vapor-deposited on both the carbon nanotube central yarn and the carbon nanotube untwisted yarn, before the carbon nanotube untwisted yarn is wound around the carbon nanotube central yarn.

According to such a method, the carbon nanotube central yarn and the carbon nanotube untwisted yarn are each immersed in a metal-containing solution and thereby support a metal, or a metal is vapor-deposited on both the carbon nanotube central yarn and the carbon nanotube untwisted yarn and thereby a metal film is formed on them, before the carbon nanotube untwisted yarn is wound around the carbon nanotube central yarn.

Therefore, in addition to providing the carbon nanotube fiber with metallic properties, the carbon nanotube central yarn and the carbon nanotube untwisted yarn may reliably be attached closely to each other when the carbon nanotube untwisted yarn is wound around the carbon nanotube central yarn.

The ninth aspect of the present invention includes the method for manufacturing a carbon nanotube fiber according to any one of the second to seventh aspects, wherein in the step of winding the carbon nanotube untwisted yarn around the carbon nanotube central yarn, the carbon nanotube central yarn and the carbon nanotube untwisted yarn are each stacked on a film comprising a macromolecular material or are each immersed in a macromolecule-containing solution containing a macromolecular material and then dried, or a macromolecular solution in which a macromolecular material is dissolved is electrospinned on both the carbon nanotube central yarn and the carbon nanotube untwisted yarn, before the carbon nanotube untwisted yarn is wound around the carbon nanotube central yarn.

According to such a method, a film comprising a macromolecular material is stacked on both the carbon nanotube central yarn and the carbon nanotube untwisted yarn; the macromolecular solution is deposited on both the carbon nanotube central yarn and the carbon nanotube untwisted yarn by electrospinning; or both the carbon nanotube central yarn and the carbon nanotube untwisted yarn are immersed in a macromolecule-containing solution and thereby support a macromolecular material, before the carbon nanotube untwisted yarn is wound around the carbon nanotube central yarn.

Therefore, the carbon nanotube fiber can have properties of a macromolecular material. In addition, the carbon nanotube central yarn and the carbon nanotube untwisted yarn can reliably be attached closely to each other when the carbon nanotube untwisted yarn is wound around the carbon nanotube central yarn.

The tenth aspect of the present invention includes the method for manufacturing a carbon nanotube fiber according to the eighth of ninth aspect, further comprising a step of heating the carbon nanotube central yarn around which the carbon nanotube untwisted yarn is wound.

According to such a method, the carbon nanotubes of the carbon nanotube central yarn and the carbon nanotube untwisted yarn may be reliably complexed with the metal or macromolecular material because the metal or the macromolecular material contained in the carbon nanotube central yarn and the carbon nanotube untwisted yarn are melted together when the carbon nanotube central yarn around which the carbon nanotube untwisted yarn is wound is heated.

The 11th aspect of the present invention includes the method for manufacturing a carbon nanotube fiber according to any one of the second to tenth aspects, wherein in the step of winding the carbon nanotube untwisted yarn around the carbon nanotube central yarn, the carbon nanotube central yarn and the carbon nanotube untwisted yarn are each surface-treated by a UV treatment or a plasma treatment, before the carbon nanotube untwisted yarn is wound around the carbon nanotube central yarn.

According to such a method, the carbon nanotube central yarn and the carbon nanotube untwisted yarn may reliably be attached closely to each other when the carbon nanotube untwisted yarn is wound around the carbon nanotube central yarn, because the carbon nanotube central yarn and the carbon nanotube untwisted yarn are each surface-treated by a UV treatment or a plasma treatment before the carbon nanotube untwisted yarn is wound around the carbon nanotube central yarn.

The 12th aspect of the present invention includes an apparatus for manufacturing a carbon nanotube fiber, the apparatus comprising: a first supplying part for supplying a carbon nanotube central yarn which comprises a plurality of bundled carbon nanotube untwisted yarns and extends in a predetermined direction; a collecting part which is located at a distance to the first supplying part in the predetermined direction and is configured to collect the carbon nanotube central yarn supplied from the first supplying part; and a second supplying part for supplying a carbon nanotube untwisted yarn to the carbon nanotube central yarn located between the first supplying part and the collecting part, wherein the first supplying part or the collecting part can rotate around an axis line along the predetermined direction as its rotational center.

According to such a configuration, the first supplying part may supply a carbon nanotube central yarn by bundling a plurality of carbon nanotube untwisted yarn. Also, the second supplying part may supply a carbon nanotube untwisted yarn to the carbon nanotube central yarn. Further, the carbon nanotube untwisted yarn may be wound around the carbon nanotube central yarn by rotating either the first supplying part or the collecting part.

Therefore, the carbon nanotube fiber comprising a carbon nanotube central yarn around which a carbon nanotube untwisted yarn is wound may be efficiently manufactured.

The 13th aspect of the present invention includes a carbon nanotube fiber, comprising: a carbon nanotube central yarn comprising a plurality of bundled carbon nanotube untwisted yarns each comprising a plurality of continuously connected carbon nanotubes; and a carbon nanotube untwisted yarn wound around the carbon nanotube central yarn.

According to such a configuration, the carbon nanotube central yarn may be located at the central part, and the carbon nanotube untwisted yarn may be located around the carbon nanotube central yarn in addition to readily improving the density of the carbon nanotube fiber, because the carbon nanotube untwisted yarn is wound around the carbon nanotube central yarn comprising a plurality of bundled carbon nanotube untwisted yarns.

That is, in addition to improving the density of the carbon nanotube fiber, the mechanical properties may be reliably improved because the carbon nanotube central yarn and the carbon nanotube untwisted yarn may be well-balancedly located.

The 14th aspect of the present invention includes a method for manufacturing a carbon nanotube composite fiber, wherein the method further comprises the steps of: preparing a core material extending in a predetermined direction; preparing a plurality of carbon nanotubes which are aligned on a substrate and are oriented vertically to the substrate; preparing a carbon nanotube untwisted yarn by drawing a carbon nanotube untwisted yarn comprising a plurality of continuously connected carbon nanotubes from the a plurality of carbon nanotubes on the substrate; preparing a composite fiber precursor by winding the carbon nanotube untwisted yarn around the core material; and heating the composite fiber precursor.

According to such a method, the core material and the carbon nanotube untwisted yarn may be complexed together because the composite fiber precursor comprising a core material around which a carbon nanotube untwisted yarn is wound is heated. Therefore, the mechanical properties of the carbon nanotube composite fiber may be reliably improved.

Further, the composite fiber precursor may be prepared by a simple method in which a carbon nanotube untwisted yarn is wound around a core material. Further, in the composite fiber precursor, the core material is reliably located at the central part, and the carbon nanotube untwisted yarn is located around the core material. Therefore, in the carbon nanotube composite fiber, the core material may reliably be located at the central part, and the carbon nanotube untwisted yarn may be located around the core material. As a result, the mechanical properties of the carbon nanotube composite fiber may be further improved in addition to achieving the well-balanced properties of the core material and the carbon nanotube untwisted yarn in the carbon nanotube composite fiber

Further, each of the plurality of carbon nanotubes in the carbon nanotube untwisted yarn is oriented along the feeding direction of the carbon nanotube untwisted yarn, because the carbon nanotube untwisted yarn is drawn from the plurality of carbon nanotubes oriented vertically to the substrate.

Therefore, the orientation of the carbon nanotubes may be reliably ensured even in a state where the carbon nanotube untwisted yarn is wound around the core material, and thus the carbon nanotube composite fiber may reliably have the properties based on the carbon nanotube untwisted yarn.

The 15th aspect of the present invention includes the method for manufacturing a carbon nanotube fiber according to the 14th aspect, wherein the step of preparing a carbon nanotube array comprises the steps of: locating a catalyst layer on the substrate; and growing a plurality of carbon nanotubes from the catalyst layer by supplying a source gas to the substrate.

According to such a method, a plurality of carbon nanotubes oriented vertically to a substrate may be reliably prepared because the plurality of carbon nanotubes grow from the catalyst layer which is located on the substrate.

The 16th aspect of the present invention includes the method for manufacturing a carbon nanotube fiber according to the 14th or 15th aspect, wherein the core material is made of a metal, and wherein in the step for preparing a carbon nanotube untwisted yarn, the carbon nanotube untwisted yarn is immersed in a metal-containing solution containing a metal and then is dried, or a metal is vapor-deposited on the carbon nanotube untwisted yarn.

According to such a method, the carbon nanotube untwisted yarn is immersed in a metal-containing solution and thus supports a metal, or a metal is vapor-deposited on the carbon nanotube untwisted yarn, and thus a metal film is formed on it, before the carbon nanotube untwisted yarn is wound around the core material.

Therefore, when such a carbon nanotube untwisted yarn is wound around a core material made of a metal, the core material and the carbon nanotube untwisted yarn may reliably be attached closely to each other. Further, the core material and the carbon nanotube may be reliably complexed together because the core material and the metal (metal film) contained in the carbon nanotube are melted together when the composite fiber precursor is heated.

The 17th aspect of the present invention includes the method for manufacturing a carbon nanotube fiber according to the 14th or 15th aspect, wherein the core material is made of a macromolecular material, wherein in the step of preparing a carbon nanotube untwisted yarn, the carbon nanotube untwisted yarn is stacked on a film made of a macromolecular material, or the carbon nanotube untwisted yarn is immersed in a macromolecule-containing solution containing a macromolecular material and then is dried, or a macromolecular solution in which a macromolecular material is dissolved is electrospinned to the carbon nanotube untwisted yarn. According to such a method, the film comprising a macromolecular material is stacked on the carbon nanotube untwisted yarn, or the carbon nanotube untwisted yarn is immersed in the macromolecule-containing solution and thus supports a macromolecular material, or the macromolecular solution is deposited on the carbon nanotube untwisted yarn by electrospinning before the carbon nanotube untwisted yarn is wound around the core material.

Therefore, the core material and the carbon nanotube untwisted yarn may reliably be attached closely to each other when the carbon nanotube untwisted yarn is wound around the core material made of a macromolecular material. Further, the core material and the carbon nanotube may be reliably complexed together because the core material and the macromolecular material contained in the carbon nanotube are melted together when the composite fiber precursor is heated.

The 18th aspect of the present invention includes an apparatus for manufacturing a carbon nanotube fiber, the apparatus comprising: a feeding part which is configured to feed a core material in a predetermined direction and can rotate around an axis line along the predetermined direction as its rotational center; a collecting part which is located at a distance to the feeding part in the predetermined direction and is configured to collect the core material fed from the feeding part, and can rotate around an axis line along the predetermined direction as its rotational center; a supplying part for supplying a carbon nanotube untwisted yarn to the core material located between the feeding part and the collecting part; and a heating part which is configured to heat a core material around which a carbon nanotube untwisted yarn is wound by rotation of the feeding part and the collecting part.

According to such a configuration, despite of its simplicity, a carbon nanotube untwisted yarn may be wound around a core material by each of the rotations of the feeding part and the collecting part, and a core material around which a carbon nanotube untwisted yarn is wound may be heated by the heating part.

Therefore, a carbon nanotube composite fiber in which a carbon nanotube untwisted yarn is wound around a core material and in which a core material and a carbon nanotube untwisted yarn are complexed together may be efficiently manufactured.

The 19th aspect of the present invention includes a carbon nanotube fiber, comprising: a core material extending in a predetermined direction; and a carbon nanotube untwisted yarn comprising a plurality of continuously connected carbon nanotubes, wherein the carbon nanotube untwisted yarn is wound around the core material.

According to such a configuration, a core material may be reliably located at the central part in the carbon nanotube composite fiber, and a carbon nanotube untwisted yarn may be located around the core material because the carbon nanotube untwisted yarn is wound around the core material. Therefore, in addition to improving the mechanical properties, the well-balanced properties of the core material and the carbon nanotube untwisted yarn may be obtained.

### EFFECT OF THE INVENTION

The method for manufacturing a carbon nanotube fiber of the present invention may be simple and make it possible to manufacture a carbon nanotube fiber having improved mechanical properties.

Also, the method for manufacturing a carbon nanotube composite fiber of the present invention may be simple and make it possible to manufacture a carbon nanotube fiber having improved mechanical properties and well-balanced properties of the core material and the carbon nanotube untwisted yarn.

Also, the apparatus for manufacturing a carbon nanotube fiber of the present invention may efficiently manufacture a carbon nanotube fiber comprising a carbon nanotube central yarn around which a carbon nanotube untwisted yarn is wound.

Also, the apparatus for manufacturing a carbon nanotube composite fiber of the present invention may efficiently manufacture a carbon nanotube fiber in which a carbon nanotube untwisted yarn is wound around a core material and in which the core material and the carbon nanotube untwisted yarn are complexed together.

Also, the carbon nanotube fiber of the present invention may reliably have improved mechanical properties.

Also, the carbon nanotube composite fiber of the present invention may have improved mechanical properties and well-balanced properties of the core material and the carbon nanotube untwisted yarn.

### BRIEF DESCRIPTION OF THE DRAWINGS

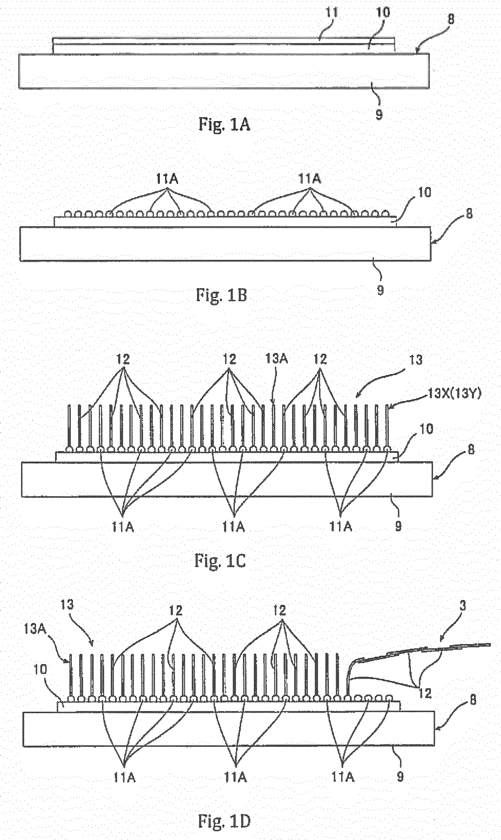

Fig. 1A is an illustration for showing one embodiment of the manufacture steps of the carbon nanotube untwisted yarn according to the present invention and shows the step of forming a catalyst layer on a substrate. Following Fig. 1A, Fig. 1B shows a step of heating the substrate to aggregate a catalyst layer into a plurality of granular bodies. Following Fig. 1B, Fig. 1C shows a step of growing a plurality of carbon nanotubes by supplying source gas to the plurality of granular bodies. Following Fig. 1C, Fig. 1D shows a step of preparing a carbon nanotube untwisted yarn by drawing a plurality of carbon nanotubes.
Fig. 2 is a perspective illustration of a fiber-manufacturing apparatus according to the first embodiment of the apparatus for manufacturing a carbon nanotube fiber of the present invention.
Fig. 3A shows the schematic configuration of the fiber-manufacturing apparatus shown in Fig. 2. Fig. 3B is a sectional view of the carbon nanotube fiber shown in Fig. 3A.
Fig. 4 is a plan view of the second embodiment of the apparatus for manufacturing a carbon nanotube fiber of the present invention.
Fig. 5 is a schematic configuration of the third embodiment of the apparatus for manufacturing a carbon nanotube fiber of the present invention.
Fig. 6 is a schematic configuration of the fourth and the eighth embodiments of the apparatus for manufacturing a carbon nanotube fiber of the present invention.
Fig. 7 is a schematic configuration of the fifth embodiment of the apparatus for manufacturing a carbon nanotube fiber of the present invention.
Fig. 8 is a schematic configuration of the sixth embodiment of the apparatus for manufacturing a carbon nanotube fiber of the present invention.
Fig. 9 is a schematic configuration of the seventh embodiment of the apparatus for manufacturing a carbon nanotube fiber of the present invention.
Fig. 10 is a perspective diagram of the ninth embodiment of the apparatus for manufacturing a carbon nanotube fiber of the present invention.
Fig. 11 is a schematic configuration of the apparatus for manufacturing a carbon nanotube fiber shown in Fig. 10.
Fig. 12 is a sectional view of the carbon nanotube composite fiber shown in Fig. 11. Fig. 13 is a schematic configuration of another embodiment of the apparatus for manufacturing a carbon nanotube fiber of the present invention (a configuration further comprising an immersing part].
Fig. 14 is a schematic configuration of another embodiment of the apparatus for manufacturing a carbon nanotube fiber of the present invention (a configuration further comprising a vapor-depositing part).

### DESCRIPTION OF EXAMPLE EMBODIMENTS

### 1.The first embodiment

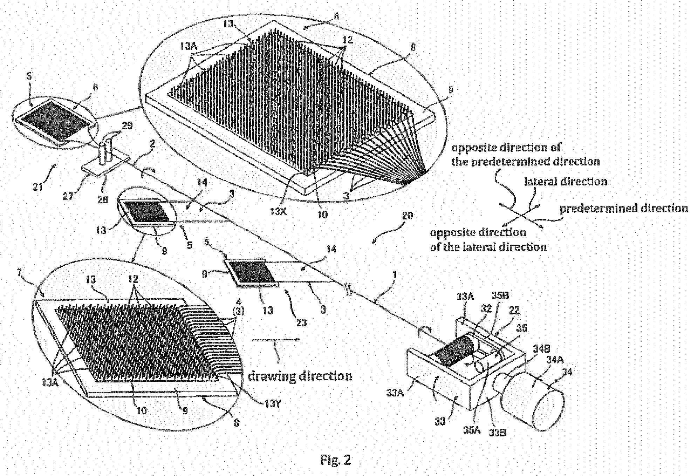

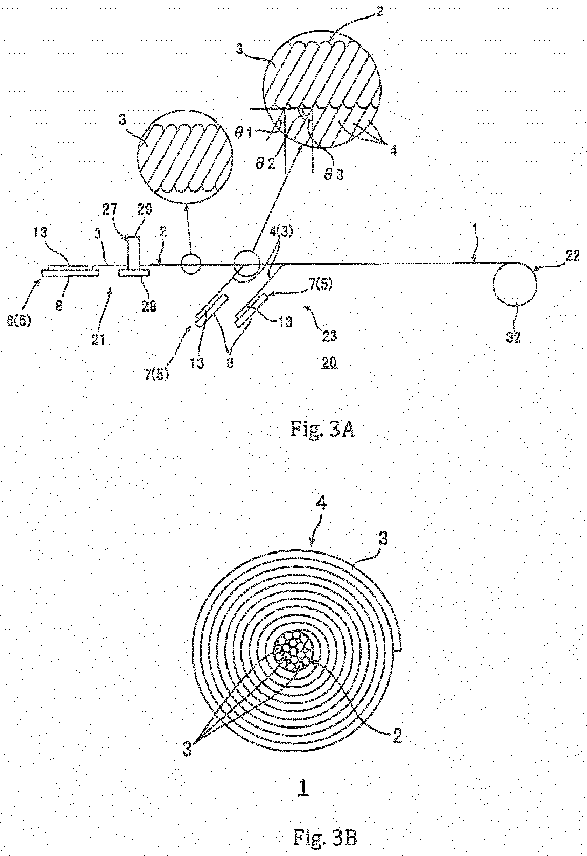

For example, as shown in Figs. 2 and 3A, the method for manufacturing a carbon nanotube fiber of the present invention comprises the steps of: preparing a core material; preparing a carbon nanotube-supporting body 5 having a carbon nanotube array 13; preparing a carbon nanotube untwisted yarn 3 by drawing it from the carbon nanotube array 13; and winding the carbon nanotube untwisted yarn 3 around the core material.

Incidentally, with respect to the first embodiment, a case where a core material is a carbon nanotube central yarn 2 prepared by bundling of a plurality of carbon nanotube untwisted yarns 3 will be explained in detail.

For example, the first embodiment comprises the steps of: preparing a plurality of carbon nanotube-supporting bodies 5 each having a carbon nanotube array 13; preparing a carbon nanotube central yarn 2 by drawing a plurality of carbon nanotube untwisted yarns 3 from the carbon nanotube array 13 and then bundling the plurality of carbon nanotube untwisted yarns 3; and drawing a carbon nanotube untwisted yarn 3 from the carbon nanotube array 13 and then winding the carbon nanotube untwisted yarn 3 around the carbon nanotube central yarn 2.

In such a manufacturing method, the first step is to prepare the plurality of carbon nanotube-supporting bodies 5.

Each of the carbon nanotube-supporting bodies 5 comprises a substrate 8 and a carbon nanotube array 13 which is located on the substrate 8.

The substrate 8 has a substantially rectangular shape in a plane view. Specifically, the substrate 8 has a predetermined thickness and extends in a direction orthogonal to the thickness direction. The substrate 8 has a flat top surface and a flat bottom surface.

The carbon nanotube array 13 comprises a plurality of carbon nanotubes 12 which is oriented vertically (oriented perpendicularly) to the substrate 8.

In order to produce (prepare) such a carbon nanotube-supporting body 5, for example, a plurality of carbon nanotubes 12 are grown on a substrate 8 by a chemical vapor deposition method (CVD method).

In this method, a substrate 8 is first prepared as shown in Fig. 1A.

The substrate 8 is not particularly limited and may be a commercially available substrate, for example, such as a publicly known substrate used for the CVD method.

Specifically, a stainless steel substrate 9 on which a silicon dioxide film 10 is stacked, a silicon substrate, etc., may be used as the substrate 8. Among them, the stainless steel substrate 9 on which a silicon dioxide film 10 is stacked is preferable. Incidentally, Figs. 1A to 1D and Fig. 2 show a case where the substrate 8 is a stainless steel substrate 9 on which a silicon dioxide film 10 is stacked.

As shown in Fig. 1A, the catalyst layer 11 is formed on the substrate 8, preferably on the silicon dioxide film 10.

In order to form a catalyst layer 11 on the substrate 8, a metal catalyst is formed as a film on the substrate 8 (preferably on a silicon dioxide film 10) by a publicly known film-forming method.

For example, iron, cobalt, nickel, etc., may be used as the metal catalyst. Among them, iron is preferable. Such a metal catalyst may be used alone, or a plurality of kinds of metal catalysts may be used together.

For example, vacuum deposition and sputtering may be used as the film-forming method. Among then, vacuum deposition is preferable.

Accordingly the catalyst layer 11 may be located on the substrate 8.

When the substrate 8 is a stainless steel substrate 9 on which a silicon dioxide film 10 is stacked, the silicon dioxide film 10 and the catalyst layer 11 may be formed at the same time by applying a mixed solution in which a silicon dioxide precursor solution and a metal catalyst precursor solution are mixed to the stainless steel substrate 9, and then allowing the mixed solution to undergo phase separation, and then drying the substrate, as disclosed in, for example, Japanese Patent Application Publication No. 2014-94856.

Next, as shown in Fig. 1B, the substrate 8 on which a catalyst layer 11 is located is heated to a temperature from 700 °C to 900 °C. Thereby the catalyst layer 11 is aggregated into a plurality of granular bodies 11A.

Then, as shown in Fig. 1C, source gas is supplied to the heated substrate 8.

The source gas contains a hydrocarbon gas with a carbon number of 1 to 4 (low hydrocarbon gas).

For example, methane gas, ethane gas, propane gas, butane gas, ethylene gas, acetylene gas, etc., may be used as the hydrocarbon gas with a carbon number of 1 to 4. Acetylene gas is preferable among them.

The source gas may contain hydrogen gas, inert gas (for example, helium, argon, etc.), aqueous vapor, etc., as necessary.

The concentration of the hydrocarbon gas in the source gas is, for example, from 1 volume %, or preferably 30 volume % to 90 volume %, or preferably 50 volume %, when the source gas contains hydrogen gas or inert gas.

The supplying time of the source gas may be, for example, from 1 minute, or preferably 5 minutes, to 60 minutes, or preferably 30 minutes.

Accordingly, each of a plurality of carbon nanotubes 12 grows from each of the plurality of granular bodies 11A. Incidentally, Fig. 1C shows that one carbon nanotube 12 grows from one granular body 11A for convenience. However, the present embodiment is not limited to this. A plurality of carbon nanotubes 12 may grow from one granular body 11A.

Each of the plurality of carbon nanotubes 12 extends in the thickness direction of the substrate 8 such that the plurality of carbon nanotubes 12 are substantially parallel to each other on the substrate 8. That is, the plurality of carbon nanotubes 12 are vertically located (perpendicularly oriented) to the substrate 8.

Each of the plurality of carbon nanotubes 12 may be any of a single-walled carbon nanotube, a two-walled carbon nanotube, and a multi-walled carbon nanotube, and a multi-walled carbon nanotube is preferable. The carbon nanotubes 12 may be used alone, or a plurality of kinds of carbon nanotubes 12 may be used together.

The plurality of carbon nanotubes 12 have an average outer diameter of, for example, from 1 nm, or preferably 5 nm, to 100 nm, preferably 50 nm, or more preferably 20 nm.

The plurality of carbon nanotubes 12 have an average length (an average size along its axis direction) of, for example, from 1 µm, preferably 100 µm, or more preferably 200 µm, to 1,000 µm, preferably 500 µm, or more preferably 400 µm. Incidentally, the average outer diameter and the average length of the carbon nanotube 12 are measured by publicly known methods, such as Raman spectroscopic analysis and electron microscope observation.

Accordingly, a carbon nanotube array 13 comprising a plurality of carbon nanotubes 12 is formed on the substrate 8.

As shown in Fig. 2, such a carbon nanotube array 13 comprises a plurality of rows 13A each having a plurality of linearly rowed carbon nanotubes 12. The plurality of rows 13A are rowed along a direction orthogonal to the extension direction of the rows 13A. Thereby the carbon nanotube array 13 is formed in a substantially sheet-like shape.

In the carbon nanotube array 13, the bulk density of the plurality of carbon nanotubes 12 is, for example, from 10 mg/cm³, or preferably 20 mg/cm³, to 60 mg/cm³, or preferably 50 mg/cm³. Incidentally, for example, the bulk density of the carbon nanotubes 12 is calculated from a mass per unit area (weight per unit area: mg/cm²) and a length of a carbon nanotube (measured by SEM (from JEOL Co., Ltd.) or a non-contact film thickness meter (from KEYENCE Corporation)).

The plurality of carbon nanotube-supporting bodies 5 each comprising a substrate 8 and a carbon nanotube array 13 are prepared. That is, a plurality of carbon nanotube arrays 13 are prepared.

More specifically, each of the plurality of carbon nanotube-supporting bodies 5 comprises a first carbon nanotube-supporting body 6 and a second carbon nanotube-supporting body 7.

The first carbon nanotube-supporting body 6 is used for drawing a plurality of carbon nanotube untwisted yarns 3 for preparing the carbon nanotube central yarn 2. The first carbon nanotube-supporting body 6 may comprise one body or a plurality of bodies, but preferably comprises one body.

The second carbon nanotube-supporting body 7 is used for drawing carbon nanotube untwisted yarn 3 for winding around the carbon nanotube central yarn 2. The second carbon nanotube-supporting body 7 may comprise one body or a plurality of bodies, but preferably comprises a plurality of bodies.

Incidentally, Fig. 2 shows a configuration where the first carbon nanotube-supporting body 6 comprise one body, and the second carbon nanotube-supporting body 7 comprises two bodies.

Next, as shown in Fig. 1D, a plurality of carbon nanotube untwisted yarns 3 are drawn from the carbon nanotube array 13 of the first carbon nanotube-supporting body 6.

In order to draw carbon nanotube untwisted yarn 3 from the carbon nanotube array 13, for example, a part of the carbon nanotubes 12 in the carbon nanotube array 13 are drawn by a drawing device (not shown) in a direction which intersects the thickness direction of the substrate 8, preferably in the extension direction of the row 13A.

The drawn carbon nanotubes 12 are drawn out from a corresponding granular body 11A. At this moment, other carbon nanotubes 12 adjacent to the drawn carbon nanotube 12 are also drawn out from the corresponding granular body 11A, because one end (an upper end or a lower end) of the drawn carbon nanotubes 12 are attached to one end (an upper end or a lower end) of the other carbon nanotubes 12 by frictional force, van der Waals' force, etc., against the drawn carbon nanotubes 12.

Thereby a plurality of carbon nanotubes 12 are continuously drawn from the carbon nanotube array 13 to form a carbon nanotube untwisted yarn 3 comprising a plurality of continuously connected carbon nanotubes 12.

More specifically, in a carbon nanotube untwisted yarn 3, carbon nanotubes 12 are attached to each other at their lower ends or upper ends.

Further, as shown in Fig. 2, a plurality of carbon nanotube untwisted yarns 3 may be collectively drawn out from the carbon nanotube array 13 of the first carbon nanotube-supporting body 6 because the carbon nanotube array 13 comprises a plurality of rows 13A each comprising a plurality of carbon nanotubes 12. In this case, carbon nanotubes 12 of the plurality of rows 13A are drawn out at the same time (see an enlarged view in Fig. 2). Thereby a plurality of carbon nanotube untwisted yarns 3 are collectively drawn out from the carbon nanotube array 13 of the first carbon nanotube-supporting body 6.

The drawing speed of the carbon nanotube untwisted yarn 3 is, for example, from 10 mm/minute, or preferably 30 mm/minute, to 100 mm/minute, or preferably 70 mm/minute.

As described above, a plurality of carbon nanotube untwisted yarns 3 are drawn out from the carbon nanotube array 13 of the first carbon nanotube-supporting body 6.

Each of the plurality of carbon nanotube untwisted yarns 3 is an untwisted yarn which is not twisted together and has a yarn shape (linear shape). That is, the twist angle of the carbon nanotube untwisted yarn 3 is substantially 0 degree. In the carbon nanotube untwisted yarn 3, each of a plurality of carbon nanotubes 12 linearly continues and, is oriented along the feeding direction of the carbon nanotube untwisted yarn 3.

Each of the plurality of carbon nanotube untwisted yarns 3 has a diameter (a thickness of a carbon nanotube sheet comprising a plurality of carbon nanotube untwisted yarns 3) of, for example, from 30 nm, or preferably 60 nm, to 100 nm, or preferably 80 nm.

Next, the plurality of carbon nanotube untwisted yarns 3 are bundled to prepare a carbon nanotube central yarn 2.

The method for bundling the plurality of carbon nanotube untwisted yarns 3 is not particularly limited but may be, for example, a method for allowing the plurality of carbon nanotube untwisted yarns 3 to pass a die having holes (for example, a method disclosed in Japanese Patent Application Publication No. 2014-169521), a method for pinching the plurality of carbon nanotube untwisted yarns 3 between a plurality of rollers (for example, a method disclosed in Japanese Patent Application Publication No. 2011-208296), or a method for allowing the plurality of carbon nanotube untwisted yarns 3 to pass between a pair of axial parts located separately with a small interval between them.

Among such methods, the method for allowing the plurality of carbon nanotube untwisted yarns 3 to pass between a pair of shaft parts 29 located separately with a small interval between them is preferable.

Each of the pair of shaft parts 29 extends in a direction orthogonal to the feeding direction of the carbon nanotube untwisted yarn 3 and is configured to be rotatable along an axis line. The detail of the shaft parts 29 will be explained below.

A carbon nanotube central yarn 2 (a core material) extending in the predetermined direction is produced (prepared) by bundling the plurality of carbon nanotube untwisted yarns 3.

That is, the step for preparing a core material comprises the steps of: preparing a carbon nanotube array 13 (a first carbon nanotube-supporting body 6) located on a substrate 8; and preparing a carbon nanotube central yarn 2 by drawing a plurality of carbon nanotube untwisted yarn 3 from the carbon nanotube array 13 and then bundling the plurality of carbon nanotube untwisted yarns 3.

The carbon nanotube central yarn 2 may be an untwisted yarn which is not formed by twisting a plurality of carbon nanotube untwisted yarns 3, but preferably is a twisted yarn formed by twisting a plurality of carbon nanotube untwisted yarns 3.

As shown in Fig. 3A, the twist angle θ1 of the carbon nanotube central yarn 2 is from 40 degrees to 85 degrees, preferably from 50 degrees to 75 degrees when the carbon nanotube central yarn 2 is a twisted yarn.

The diameter of the carbon nanotube central yarn 2 is from 5 µm, or preferably 10 µm, to 50 µm, preferably 45 µm, or more preferably 30 µm.

If the diameter of the carbon nanotube central yarn 2 is not less than the above lower limit, the mechanical strength of the carbon nanotube central yarn 2 is reliably ensured. If the diameter of the carbon nanotube central yarn 2 is not more than the above upper limit, the density of the carbon nanotube central yarn 2 may be reliably improved (that is, the void ratio of the carbon nanotube central yarn 2 may be lowered).

More specifically, the bulk density of the carbon nanotube central yarn 2 is, for example, from 0.6 g/cm³, or preferably 0.8 g/cm³, to 2.0 g/cm³. Incidentally, the bulk density of the carbon nanotube central yarn 2 is more than, for example, 0.6 g/cm³ when the carbon nanotube central yarn 2 is a twisted yarn.

Next, a carbon nanotube untwisted yarn 3 is drawn from the carbon nanotube array 13 of the second carbon nanotube-supporting body 7 in the same manner as described above.

Further, preferably, a plurality of carbon nanotube untwisted yarns 3 are collectively drawn from the carbon nanotube array 13 of the second carbon nanotube-supporting body 7. In this case, carbon nanotubes 12 of the plurality of rows 13A are drawn out at the same time and in parallel (see an enlarged view in Fig. 2). Thereby a plurality of carbon nanotube untwisted yarns 3 are located in parallel in a direction which intersects the feeding direction of the carbon nanotube untwisted yarn 3. Accordingly, the plurality of carbon nanotube untwisted yarns 3 which are arrayed in parallel substantially have a sheet shape and are configured as a carbon nanotube sheet 14.

In the first embodiment, the plurality of carbon nanotube untwisted yarns 3 (carbon nanotube sheet 14) are drawn out from each of the carbon nanotube arrays 13 of the plurality of second carbon nanotube-supporting bodies 7.

Incidentally, hereinafter, the carbon nanotube untwisted yarns 3 which are drawn out from the second carbon nanotube-supporting body 7 will be referred to as a carbon nanotube winding yarn 4.

Next, a carbon nanotube winding yarn 4 (carbon nanotube sheet 14) is wound around the circumferential surface of the carbon nanotube central yarn 2 (a core material).

In order to wind a carbon nanotube winding yarn 4 around the carbon nanotube central yarn 2, for example, one end of the carbon nanotube winding yarn 4 is fixed to the carbon nanotube central yarn 2 (or the carbon nanotube untwisted yarn 3 which is wound around the circumferential surface of the carbon nanotube central yarn 2), and then the carbon nanotube central yarn 2 is rotated around the axis line of the carbon nanotube central yarn 2 as its rotational center.

Incidentally, as shown in Fig. 3A, the angle θ2 made by the feeding direction of the carbon nanotube central yarn 2 and the feeding direction of the carbon nanotube winding yarn 4 is an acute angle. The angle is, for example, from 5 degrees to 50 degrees, or preferably from 15 degrees to 40 degrees.

Preferably, the carbon nanotube winding yarn 4 is spirally wound around the carbon nanotube central yarn 2. In such a case, one end of the carbon nanotube winding yarn 4 (one end of the carbon nanotube 12) is fixed to the carbon nanotube central yarn 2, and then the carbon nanotube central yarn 2 is moved in the predetermined direction while the carbon nanotube central yarn 2 is rotated around the axis line of the carbon nanotube central yarn 2 as its rotational center.

Preferably, when the carbon nanotube central yarn 2 is a twisted yarn, the carbon nanotube winding yarn 4 is spirally wound around the carbon nanotube central yarn 2 such that the carbon nanotube winding yarn 4 extends along the twist direction of the carbon nanotube central yarn 2.

In this case, one end of the carbon nanotube winding yarn 4 is fixed to the carbon nanotube central yarn 2 such that the angle of winding angle θ3 (complementary angle of angle θ2) is substantially the same as the twist angle θ1 of the carbon nanotube central yarn 2. More specifically, the winding angle θ3 of the carbon nanotube winding yarn 4 is within ±5 degrees, preferably within ±3 degrees with respect to the twist angle θ1 of the carbon nanotube central yarn 2.

The carbon nanotube winding yarn 4 is wound around the circumferential surface of the carbon nanotube central yarn 2 for at least one turn, preferably for a plurality of turns.

As shown in Fig. 3B, the carbon nanotube winding yarn 4 is stacked for a plurality of turns over the entire circumferential surface of the carbon nanotube central yarn 2 when the carbon nanotube winding yarn 4 is wound for a plurality of turns around the circumferential surface of the carbon nanotube central yarn 2.

The number of the stacked layers of the carbon nanotube winding yarn 4 is, for example, from 20, preferably 50, or more preferably 80, to 200, preferably 150, or more preferably 120.

Accordingly, a carbon nanotube fiber 1 comprising a carbon nanotube central yarn 2 and the carbon nanotube winding yarn 4 is prepared, wherein the carbon nanotube central yarn 2 is formed by bundling a plurality of carbon nanotube untwisted yarns 3, and wherein the carbon nanotube winding yarn 4 is wound around the carbon nanotube central yarn 2.

In the carbon nanotube fiber 1, the carbon nanotube central yarn 2 is located at the approximate center of the carbon nanotube fiber 1, and the carbon nanotube winding yarn 4 is stacked on the circumferential surface of the carbon nanotube central yarn 2 over the entire circumferential surface of the carbon nanotube central yarn 2 at a substantially constant thickness (size in the diameter direction).

The diameter of such a carbon nanotube fiber 1 is, for example, from 2 µm, preferably 5 µm, or more preferably 10 µm, to 70 µm, preferably 60 µm, more preferably 40 µm, or still more preferably 20 µm.

If the diameter of the carbon nanotube fiber 1 is not less than the lower limit, the mechanical strength of the carbon nanotube fiber 1 is reliably ensured. If the diameter of the carbon nanotube fiber 1 is not more than the upper limit, the density of the carbon nanotube fiber 1 may be reliably improved.

More specifically, the bulk density of the carbon nanotube fiber 1 is, for example, from 0.6 g/cm³, or preferably 0.8 g/cm³, to 2.0 g/cm³. Incidentally, the bulk density of the carbon nanotube fiber 1 is, for example, more than 0.6 g/cm³ when the carbon nanotube central yarn 2 is a twisted yarn.

The breaking strength of such a carbon nanotube fiber 1 is, for example, from 200 mN, or preferably 300 mN, to 800 mN, or preferably 700 mN.

Incidentally, the breaking strength of the carbon nanotube fiber 1 is measured by an apparatus for measuring a uniaxial tensile strength.

Such a carbon nanotube fiber 1 is used for various industrial products, such as a textile (sheet) for which a carbon fiber is used and a conductive line material for electric apparatuses (for example, a motor, a transformer, a sensor, etc.).

As shown in Fig. 2, such a method for manufacturing a carbon nanotube fiber is continuously carried out by the fiber-manufacturing apparatus 20, which is an example of the apparatus for manufacturing a carbon nanotube fiber.

The fiber-manufacturing apparatus 20 comprises a central yarn-supplying part 21, which is an example of the first supplying part, a collecting part 22, and a winding-yarn-supplying part 23, which is an example of the second supplying part.

The central yarn-supplying part 21 is configured to feed the carbon nanotube central yarn 2 in the predetermined direction. The central yarn-supplying part 21 comprises a first carbon nanotube-supporting body 6, a drawing device which is not illustrated, and a converging part 27.

As described above, the first carbon nanotube-supporting body 6 comprises a substrate 8 and a carbon nanotube array 13.

The first carbon nanotube-supporting body 6 is located such that the extension directions of the rows 13A of the carbon nanotube array 13 are along the predetermined direction.

The carbon nanotube array 13 of the first carbon nanotube-supporting body 6 has a substantially rectangular shape in a planar view. The carbon nanotubes 12 which are most forwardly located in the predetermined direction in each of the plurality of rows 13A are linearly located along the lateral direction which is orthogonal to the predetermined direction and thus constitute an end part 13X of the carbon nanotube array 13 on the predetermined direction side.

The converging part 27 is located at a distance to the first carbon nanotube-supporting body 6 in the predetermined direction. The converging part 27 comprises a supporting plate 28 and a pair of shaft parts 29.

The supporting plate 28 has a substantially rectangular board shape extending in the lateral direction in a plane view.

In the substantially central area of the upper surface of the supporting plate 28, the pair of shaft parts 29 are separately located with a slight distance between them. Each of the pair of shaft parts 29 has a substantially cylindrical shape extending in a vertical direction and is supported by the supporting plate 28 such that each of the pair of shaft parts 29 can rotate around its axial core.

The collecting part 22 is configured to collect the carbon nanotube central yarn 2 fed from the central yarn-supplying part 21 and is located at a distance to the central yarn-supplying part 21 in the predetermined direction. The collecting part 22 comprises a rotating part 33, a collecting shaft 32, a shaft driving part 35, and a rotary driving part 34.

The rotating part 33 substantially has a U-shape in a plane view and is opened toward an opposite direction to the predetermined direction. The rotating part 33 integrally has the pair of shaft-supporting parts 33A and the connecting part 33B.

The pair of shaft-supporting parts 33A are located at a distance between them in the lateral direction. Each of the pair of shaft-supporting parts 33A substantially has a board shape extending in the predetermined direction.

The connecting part 33B is configured to connect end parts of the pair of the shaft-supporting parts 33A on the predetermined direction side. The connecting part 33B substantially has a board shape extending in the lateral direction.

The collecting shaft 32 is located between end parts of the pair of shaft-supporting parts 33A on the opposite direction side to the predetermined direction. The collecting shaft 32 has a substantially cylindrical shape extending in the lateral direction, and each of both ends of the collecting shaft 32 is rotatably supported by corresponding one of the shaft-supporting parts 33A.

The shaft driving part 35 is configured to supply driving force to the collecting shaft 32 when electric power is externally supplied. The shaft driving part 35 is located between the pair of shaft-supporting parts 33A in the lateral direction and is located between the collecting shaft 32 and the connecting part 33B in the predetermined direction.

The shaft driving part 35 comprises a motor shaft 35A and a driving-force-transmitting belt 35B.

The motor shaft 35A is rotatably supported by one of the pair of shaft-supporting parts 33A and rotates by the driving force supplied from a motor body which is not illustrated.

The driving-force-transmitting belt 35B is a publicly known endless belt and is stretched between one end of the motor shaft 35A on the lateral direction side and one end of the collecting shaft 32 on the lateral direction side.

The rotary driving part 34 is configured to supply driving force to the rotating part 33 when electric power is externally supplied to the rotary driving part 34. The rotary driving part 34 is located on the predetermined direction side relative to the rotating part 33.

The rotary driving part 34 comprises, for example, a publicly known motor and includes a motor body 34A and a motor shaft 34B which is rotatably supported by the motor body 34A. One end of the motor shaft 34B on the opposite side to the predetermined direction is fixed to the laterally central part of the connecting part 33B of the rotating part 33. Thereby the rotating part 33 can rotate around the motor shaft 34B, i.e., an axis line along the predetermined direction as its rotational center.

The winding-yarn-supplying part 23, which will be explained below in more detail, is configured to supply a carbon nanotube untwisted yarn 3 (a carbon nanotube winding yarn 4) to a carbon nanotube central yarn 2 located between the central yarn-supplying part 21 and the collecting part 22.

The winding-yarn-supplying part 23 comprises a second carbon nanotube-supporting body 7 and a drawing device which is not illustrated.

A plurality of second carbon nanotube-supporting bodies 7 are located between the converging part 27 and the collecting part 22. Specifically, there are two second carbon nanotube-supporting bodies 7.

As described above, each of the plurality of second carbon nanotube-supporting bodies 7 comprises a substrate 8 and a carbon nanotube array 13.

Each of the plurality of second carbon nanotube-supporting bodies 7 is located such that the extension direction of the rows 13A of the carbon nanotube array 13 intersect both the predetermined direction and the lateral direction. The plurality of second carbon nanotube-supporting bodies 7 are located at a distance therebetween in the predetermined direction such that the extension directions of the rows 13A of the carbon nanotube array 13 are substantially parallel to each other.

The carbon nanotube array 13 of each of the second carbon nanotube-supporting bodies 7 has a substantially rectangular shape in a plane view. The carbon nanotubes 12 which are located at the nearest positions from the carbon nanotube central yarn 2 in the plurality of rows 13A are linearly located along a direction which is orthogonal to the extension direction of the rows 13A and thus constitute a downstream end 13Y of the carbon nanotube array 13 on the drawing direction side.

In such a fiber-manufacturing apparatus 20, a plurality of carbon nanotube untwisted yarns 3 are drawn from the carbon nanotube array 13 of the first carbon nanotube-supporting body 6 by a drawing device which is not illustrated.

More specifically, the end part 13X of the carbon nanotube array 13 on the predetermined direction side is collectively held by the drawing device (not shown) and drawn in the predetermined direction.

Thereby in each of the plurality of rows 13A, a plurality of carbon nanotubes 12 are continuously drawn and thus a plurality of carbon nanotube untwisted yarns 3 are formed.

Then the plurality of carbon nanotube untwisted yarns 3 are allowed to pass between the pair of shaft parts 29. At this moment, each of the pair of shaft parts 29 is passively rotated due to the friction against the plurality of carbon nanotube untwisted yarns 3.

Thereby the plurality of carbon nanotube untwisted yarns 3 are bundled, and thus a carbon nanotube central yarn 2 is prepared.

Then the carbon nanotube central yarn 2 is drawn in the predetermined direction such that the carbon nanotube central yarn 2 passes on the lateral direction side of the winding-yarn-supplying part 23, and then one end of the carbon nanotube central yarn 2 on the predetermined direction side is fixed to the collecting shaft 32 of the collecting part 22. Thereby the carbon nanotube central yarn 2 is stretched between the central yarn-supplying part 21 and the collecting part 22.

Incidentally, in this state, the carbon nanotube central yarn 2 is an untwisted yarn whose plurality of carbon nanotube untwisted yarns 3 have not yet been twisted.

Next, a plurality of carbon nanotube winding yarns 4 (a plurality of carbon nanotube untwisted yarns 3) are drawn from each of the carbon nanotube arrays 13 of a plurality of second carbon nanotube-supporting bodies 7 by the drawing device (not shown).

More specifically, the downstream end 13Y of the carbon nanotube array 13 on the drawing direction side is collectively hold and drawn toward the carbon nanotube central yarn 2 by the drawing device (not shown).

Thereby, in each of the plurality of rows 13A, a plurality of carbon nanotubes 12 are continuously drawn and thus a plurality of carbon nanotube winding yarns 4 are formed. At this moment, the plurality of carbon nanotube winding yarns 4 are located in parallel along a direction orthogonal to the drawing direction and thus has a substantially sheet-like shape to constitute a carbon nanotube sheet 14.

Then one end of each of the plurality of carbon nanotube winding yarns 4 (one end of the carbon nanotube sheet 14) is fixed to the carbon nanotube central yarn 2 which is located between the converging part 27 and the collecting part 22.

Next, electric power is supplied to the shaft driving part 35 while electric power is supplied to the rotary driving part 34 of the collecting part 22.

Then each of the motor shaft 34B of the rotary driving part 34 rotates clockwise when it is seen from the predetermined direction side. Along with the rotation, the rotating part 33 is rotated clockwise when it is seen from the predetermined direction side. Also, the motor shaft 35A of the shaft driving part 35 is rotated clockwise when it is seen from the opposite side to the lateral direction. Along with the rotation, the collecting shaft 32 is rotated clockwise when it is seen from the opposite side to the lateral direction.

Thereby the carbon nanotube central yarn 2 is rotated clockwise when it is seen from the predetermined direction side and thus is twisted. At the same time, the carbon nanotube central yarn 2 is rolled up by the collecting shaft32.

More specifically, a plurality of carbon nanotube untwisted yarns 3 are continuously drawn from the carbon nanotube array 13 of the first carbon nanotube-supporting body 6 and then are bundled by the converging part 27. Thereby carbon nanotube central yarn 2 is fed out from the central yarn-supplying part 21 and is moved in the predetermined direction while the carbon nanotube central yarn 2 is rotated, and then is rolled up by the collecting shaft 32. That is, the carbon nanotube central yarn 2 is continuously moved from the central yarn-supplying part 21 to the collecting part 22 while the carbon nanotube central yarn 2 is rotated.

The rotation speed (peripheral velocity) of the carbon nanotube central yarn 2 is, for example, from 0.1 m/min, or preferably 0.5 m/min, to 10 m/min, preferably 6.0 m/min, or more preferably 3.0 m/min.

Also, the moving speed of the carbon nanotube central yarn 2 is, for example, from 0.1 m/min, or preferably 0.5 m/min, to 10 m/min, preferably 6.0 m/min, or more preferably 3.0 m/min.

A carbon nanotube winding yarn 4 whose one end is fixed to a carbon nanotube central yarn 2 is spirally wound around the circumferential surface of the carbon nanotube central yarn 2 such that the carbon nanotube winding yarn 4 extends along the twist direction of the carbon nanotube central yarn 2 along with the rotation and movement of the carbon nanotube central yarn 2. Thereby a plurality of carbon nanotube winding yarns 4 are further drawn from the carbon nanotube array 13 of the second carbon nanotube-supporting body 7 and are continuously supplied to and are in turn wound around the carbon nanotube central yarn 2. The winding directions of the plurality of carbon nanotube winding yarns 4 are the same.

Thereby a carbon nanotube fiber 1 comprising a carbon nanotube central yarn 2 around which a plurality of carbon nanotube winding yarns 4 are stacked is prepared.

Then the carbon nanotube fiber 1 is rolled up around the collecting shaft 32 by the rotation of the collecting shaft 32.

Accordingly, the manufacture of the carbon nanotube fiber 1 by using the fiber-manufacturing apparatus 20 is completed.

In the first embodiment, as shown in Fig. 2, the plurality of carbon nanotube untwisted yarns 3 are bundled to prepare the carbon nanotube central yarn 2, and then the carbon nanotube winding yarn 4 (a carbon nanotube untwisted yarn 3) is wound around the carbon nanotube central yarn 2. Therefore, the density of the carbon nanotube fiber 1 may be readily improved in a simple manner.

Further, as shown in Fig. 3B, in the carbon nanotube fiber 1, the carbon nanotube central yarn 2 is located reliably at the central part, and the carbon nanotube winding yarn 4 is located around the carbon nanotube central yarn 2. Therefore, in the carbon nanotube fiber 1, the carbon nanotube central yarn 2 and the carbon nanotube winding yarn 4 may be well-balancedly located.

That is, the mechanical properties of the carbon nanotube fiber 1 may be reliably improved because the carbon nanotube central yarn 2 and the carbon nanotube winding yarn 4 may be well-balancedly located in addition to improving the density of the carbon nanotube fiber 1.

Further, as shown in Fig. 3A, the carbon nanotube central yarn 2 is prepared as a twisted yarn. Therefore, the density of the carbon nanotube central yarn 2 may be reliably improved, and thus the density of the carbon nanotube fiber 1 may be reliably improved.

Further, as shown in Fig. 3A, the carbon nanotube winding yarn 4 is wound around the carbon nanotube central yarn 2 such that the carbon nanotube winding yarn 4 extends along the twist direction of the carbon nanotube central yarn 2. Therefore, the twist direction of the carbon nanotube untwisted yarn 3 which constitutes the carbon nanotube central yarn 2 and the winding direction of the carbon nanotube winding yarn 4 may be the same.

Therefore, in the carbon nanotube fiber 1, the orientations of the carbon nanotubes 12 may be ensured more reliably.

Further, as shown in Fig. 1D, in the carbon nanotube untwisted yarn 3, each of the plurality of carbon nanotubes 12 is oriented along the extension direction of the carbon nanotube untwisted yarn 3 because the carbon nanotube untwisted yarn 3 is drawn from the plurality of carbon nanotubes 12 oriented vertically to the substrate 8.

Therefore, as shown in Fig. 3B, the orientations of the carbon nanotubes 12 may be reliably ensured both in the carbon nanotube central yarn 2 which is formed by bundling the plurality of carbon nanotube untwisted yarns 3 and in the carbon nanotube winding yarn 4. Thus the orientations of the carbon nanotubes 12 may be reliably ensured in the carbon nanotube fiber 1.

Further, as shown in Fig. 1C, in the step for preparing a plurality of carbon nanotube arrays 13, the plurality of carbon nanotubes 12 are grown from the catalyst layer 11 by supplying a source gas to the substrate 8 on which the catalyst layer 11 is located.

Therefore, the plurality of carbon nanotubes 12 may be reliably oriented vertically to the substrate 8, and thus the carbon nanotube array 13 may be reliably prepared.

Further, in the fiber-manufacturing apparatus 20, as shown in Fig. 2, the central yarn-supplying part 21 may bundle the plurality of carbon nanotube untwisted yarns 3 to supply the carbon nanotube central yarn 2, and the winding-yarn-supplying part 23 may supply the carbon nanotube winding yarn 4 to the carbon nanotube central yarn 2. Then the carbon nanotube winding yarn 4 may be wound around the carbon nanotube central yarn 2 by rotating the collecting part 22.

Therefore, the carbon nanotube fiber 1 comprising a carbon nanotube central yarn 2 around which a carbon nanotube winding yarn 4 is wound may be efficiently manufactured.

Further, in the step for winding the carbon nanotube winding yarn 4 around the carbon nanotube central yarn 2, the rotating part 33 rotates around an axis along the predetermined direction while the collecting shaft 32 of the winding-yarn-supplying part 23 rotates around an axis line along the lateral direction as its rotational center.

Thereby the carbon nanotube central yarn 2 is twisted. At the same time, the carbon nanotube winding yarn 4 is spirally wound around the carbon nanotube central yarn 2.

That is, the twist of the carbon nanotube central yarn 2 and the winding of the carbon nanotube winding yarn 4 may be carried out at the same time. Therefore, the manufacturing efficiency of the carbon nanotube fiber 1 may be improved.

Incidentally, in the fiber-manufacturing apparatus 20 of the first embodiment, the rotating part 33 of the winding-yarn-supplying part 23 rotates around an axis line along the predetermined direction as its rotational center. However, the first embodiment is not limited to this configuration. The first carbon nanotube-supporting body 6 of the central yarn-supplying part 21 may be configured to rotate around an axis line along the predetermined direction.

The same functions and effects as those achieved by the first embodiment may be achieved by the configuration.

### 2. Second Embodiment

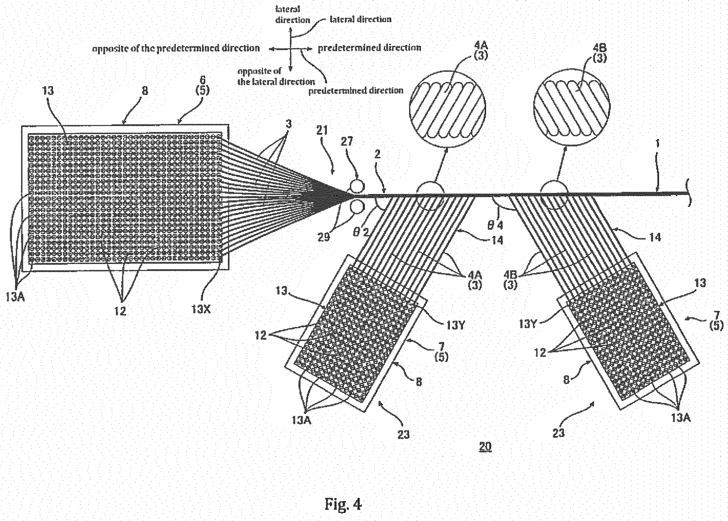

Next, with reference to Fig. 4, the second embodiment of the method for manufacturing a carbon nanotube fiber of the present invention will be explained. Incidentally, in the second embodiment, the same numbers are given to the same components as those in the first embodiment to omit the explanations for the components.

In the first embodiment, as shown in Fig. 2, the plurality of carbon nanotube winding yarns 4 are spirally wound around the carbon nanotube central yarn 2 such that the winding directions of them are the same, but the present invention is not limited to such a configuration.

In the second embodiment, as shown in Fig. 4, at least two carbon nanotube winding yarns 4 of the plurality of carbon nanotube winding yarns 4 are spirally wound around the carbon nanotube central yarn 2 such that the winding directions of said at least two carbon nanotube winding yarns 4 are different from each other.

In such a case, for example, in the winding-yarn-supplying part 23 of the fiber-manufacturing apparatus 20, the plurality of (two) second carbon nanotube-supporting bodies 7 are located at a distance therebetween in the predetermined direction such that the extension directions of the rows 13A of the carbon nanotube arrays 13 intersect each other.

More specifically, of the two second carbon nanotube-supporting bodies 7, one which is located on the opposite side to the predetermined direction is located such that the extension direction of the rows 13A toward the lateral direction inclines toward the predetermined direction. In contrast, the other second carbon nanotube-supporting body 7 which is located on the predetermined direction side is located such that the extension direction of the rows 13A toward the lateral direction inclines toward the opposite direction to the predetermined direction.

In the step of winding the carbon nanotube winding yarn 4 around the carbon nanotube central yarn 2, a first carbon nanotube winding yarn 4A which is drawn from a carbon nanotube array 13 of one second carbon nanotube-supporting body 7 which is located on the opposite side to the predetermined direction is spirally wound in a counterclockwise direction (S twist) around the carbon nanotube central yarn 2.

Incidentally, the angle θ2 made by the direction in which the carbon nanotube central yarn 2 is forwardly fed and the direction in which the first carbon nanotube winding yarn 4A is forwardly fed is an acute angle. The angle θ2 is from 20 degrees to 80 degrees, for example.

Further, a second carbon nanotube winding yarn 4B which is drawn from a carbon nanotube array 13 of the other second carbon nanotube-supporting body 7 which is located on the predetermined direction side is spirally wound in a clockwise direction (Z twist) around the carbon nanotube central yarn 2 around which the first carbon nanotube winding yarn 4A has been wound.

Incidentally, the angle θ4 made by the direction in which the carbon nanotube central yarn 2 is forwardly fed and the direction in which the second carbon nanotube winding yarn 4B is forwardly fed is an obtuse angle. The angle θ4 is from 110 degrees to 170 degrees, for example.

In the second embodiment, the first carbon nanotube winding yarn 4A and the second carbon nanotube winding yarn 4B are wound around the carbon nanotube central yarn 2 such that the winding directions of them are different from each other.

Therefore, in the carbon nanotube fiber 1, the carbon nanotubes 12 of the first carbon nanotube winding yarn 4A and the carbon nanotubes 12 of the second carbon nanotube winding yarn 4B may be oriented in directions different from each other. As a result, the electrical properties of the carbon nanotube fiber 1 may be suitably adjusted.

The second embodiment may also achieve the same functions and effects as those achieved by the first embodiment.

### 3. Third Embodiment

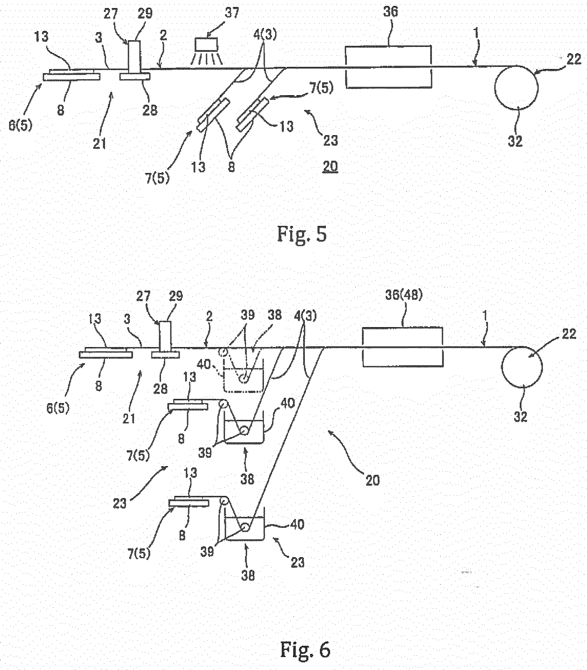

Next, with reference to Fig. 5, the third embodiment of the method for manufacturing a carbon nanotube fiber of the present invention will be explained. Incidentally, in the third embodiment, the same numbers are given to the same components as those in the first embodiment and the second embodiment to omit the explanations for the components.

In the third embodiment, in order to aggregate a plurality of carbon nanotube untwisted yarns 3, a volatile organic solvent is applied to a carbon nanotube central yarn 2 before a carbon nanotube winding yarn 4 is wound around it.

The volatile organic solvent is an organic solvent having a boiling point (at 1 atm) of below 100°C. For example, the volatile organic solvent may be an alcohol (for example, methanol (boiling point: 64.7°C), ethanol (boiling point: 78.4°C), propanol (boiling point: 98°C), etc.), a ketone (for example, acetone (boiling point: 56.5°C) etc.), an ether (for example, diethylether (boiling point: 35°C), tetrahydrofuran (boiling point: 66°C), etc.), an alkylester (for example, ethyl acetate (boiling point: 77.1°C), etc.), and a halogenated aliphatic hydrocarbon (for example, chloroform (boiling point: 61.2°C) and dichloromethane (boiling point: 40°C), etc.).

Among such volatile organic solvents, an organic solvent having a boiling point (at 1 atm) of 80°C or less is preferable, and an alcohol is more preferable, and ethanol is particularly preferable.

Such a volatile organic solvent may be used alone, or a plurality of volatile organic solvents may be used in combination.

In order to apply a volatile organic solvent to a carbon nanotube central yarn 2, for example, a volatile organic solvent in a mist form is sprayed toward the carbon nanotube central yarn 2.

In such a case, the central yarn-supplying part 21 of the fiber-manufacturing apparatus 20 comprises a spraying part 37.

The spraying part 37 is located at a distance to the carbon nanotube central yarn 2, between the converging part 27 and the winding-yarn-supplying part 23.

The spraying part 37 internally stores a volatile organic solvent and is configured to be able to spray a volatile organic solvent toward the carbon nanotube central yarn 2.

Thereby the spraying part 37 applies a volatile organic solvent to the carbon nanotube central yarn 2 which is supplied from the central yarn-supplying part 21, before the carbon nanotube winding yarn 4 is wound around the carbon nanotube central yarn 2.

Also, the fiber-manufacturing apparatus 20 comprises a dryer part 36 as necessary.

The dryer part 36 is located between the winding-yarn-supplying part 23 and the collecting part 22. The dryer part 36 is a publicly known drying device and is configured such that a carbon nanotube central yarn 2 around which a carbon nanotube winding yarn 4 is wound (carbon nanotube fiber 1) may pass thorough the inside of the drying device.

Thus, a volatile organic solvent is applied to the carbon nanotube central yarn 2, then a carbon nanotube winding yarn 4 is wound around the carbon nanotube central yarn 2, and then the carbon nanotube fiber 1 is dried by passing through the dryer part 36.

Thereby a volatile organic solvent evaporates. Thereby the plurality of carbon nanotube untwisted yarns 3 of the carbon nanotube central yarn 2 and the carbon nanotube winding yarn 4 (carbon nanotube untwisted yarn 3) which is wound around the carbon nanotube central yarn 2 each aggregate to each other.

Therefore, the density of the carbon nanotube fiber 1 may be further improved. More specifically, the bulk density of the carbon nanotube fiber 1 is, for example, from 0.6 g/cm³, or preferably 0.8 g/cm³, to 2.0 g/cm³.

As a result, the mechanical properties of the carbon nanotube fiber 1 may be improved much more reliably.

The third embodiment may also achieve the same functions and effects as those achieved by the first embodiment.

### 4. Fourth Embodiment

Next, with reference to Fig. 6, the fourth embodiment of the method for manufacturing a carbon nanotube fiber of the present invention will be explained. Incidentally, in the fourth embodiment, the same numbers are given to the same components as those in the first to third embodiments to omit the explanations for the components.

In the fourth embodiment, the carbon nanotube winding yarn 2 is immersed in the volatile organic solvent described above before it is wound around the carbon nanotube central yarn 2.

In such a case, the winding-yarn-supplying part 23 of the fiber-manufacturing apparatus 20 comprises immersing parts 38.

The immersing parts 38 correspond respectively to the plurality of second carbon nanotube-supporting bodies 7 and are located between each of the second carbon nanotube-supporting bodies 7 and the carbon nanotube central yarn 2.

Each of the immersing parts 38 comprises an immersing bath 40 and a plurality of rollers 39.

The immersing bath 40 substantially has a box shape which is opened toward the upper part and a volatile organic solvent is stored in the immersing bath.

Each of the plurality of rollers 39 is suitably located in a predetermined position such that a carbon nanotube winding yarn 4 is immersed in the volatile organic solvent in the immersing bath 40.

Thereby a carbon nanotube winding yarn 4 which is drawn from a carbon nanotube array 13 of the second carbon nanotube-supporting body 7 is immersed in the volatile organic solvent in the immersing bath 40 and then is wound around the carbon nanotube central yarn 2.

And then a carbon nanotube central yarn 2 around which a carbon nanotube winding yarn 4 is wound is dried as necessary when it passes through the dryer part 36.

Thus, the density of a carbon nanotube fiber 1 may be further improved. Also, the mechanical properties of a carbon nanotube fiber 1 may be improved much more reliably.

The fourth embodiment may also achieve the same functions and effects as those achieved by the first embodiment.

### 5. Fifth Embodiment

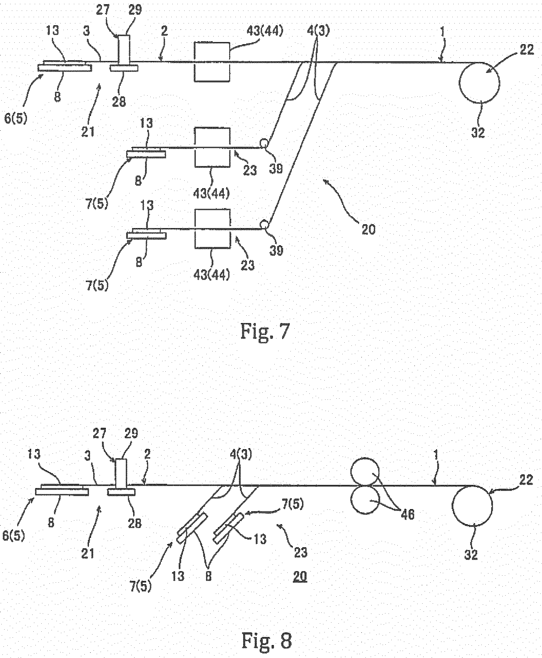

Next, with reference to Fig. 7, the fifth embodiment of the method for manufacturing a carbon nanotube fiber of the present invention will be explained. Incidentally, in the fifth embodiment, the same numbers are given to the same components as those in the first to fourth embodiments to omit the explanations for the components.

In the fifth embodiment, a carbon nanotube central yarn 2 and a carbon nanotube winding yarn 4 are each surface-treated before the carbon nanotube winding yarn 4 is wound around the carbon nanotube central yarn 2.

The surface treatment may be a UV treatment or a plasma treatment. Incidentally, the surface treatment is preferably carried out under a vacuum atmosphere or an inert gas atmosphere.

For example, when the surface treatment is a UV treatment, the central yarn-supplying part 21 and the winding-yarn-supplying part 23 of the fiber-manufacturing apparatus 20 each comprise a UV apparatus 43.

The UV apparatus 43 of the central yarn-supplying part 21 is located between the converging part 27 and the winding-yarn-supplying part 23 and is configured such that the carbon nanotube central yarn 2 may pass through the inside of the UV apparatus 43.

The UV apparatus 43 is not particularly limited but may be a publicly known UV irradiation device which is used for surface-treatment.

The UV apparatuses 43 of the winding-yarn-supplying part 23 corresponds respectively to the plurality of second carbon nanotube-supporting bodies 7 and are located between each of the second carbon nanotube-supporting bodies 7 and the carbon nanotube central yarn 2. Further, the UV apparatuses 43 of the winding-yarn-supplying part 23 are configured such that a carbon nanotube winding yarn 4 may pass through the inside of the UV apparatus 43.

The carbon nanotube central yarn 2 and the carbon nanotube winding yarn 4 are each surface-treated by the UV apparatus 43 before the carbon nanotube winding yarn 4 is wound around the carbon nanotube central yarn 2.

Thus, the properties of the surfaces of the carbon nanotube central yarn 2 and the properties of the surfaces of the carbon nanotube winding yarn 4 are each modified, and thereby the adhesion between them is improved.

Also, when a plasma treatment is carried out as the surface treatment, the central yarn-supplying part 21 and the winding-yarn-supplying part 23 of the fiber-manufacturing apparatus 20 each comprise a plasma apparatus 44 instead of the UV apparatus 43.

The plasma apparatus 44 is not particularly limited but may be a publicly known plasma-generating device used for surface-treatment.

The fifth embodiment may achieve the same functions and effects as those achieved by the first embodiment.

### 6. Sixth Embodiment

Next, with reference to Fig. 8, the sixth embodiment of the method for manufacturing a carbon nanotube fiber of the present invention will be explained. Incidentally, in the sixth embodiment, the same numbers are given to the same components as those in the first to fifth embodiments to omit the explanations for the components.

In the sixth embodiment, a carbon nanotube winding yarn 4 is wound around a carbon nanotube central yarn 2 to prepare a carbon nanotube fiber 1, and then the carbon nanotube fiber 1 is pressed.

In such a case, the fiber-manufacturing apparatus 20 comprises a pair of pressurizing rollers 46.

The pair of pressurizing rollers 46 are located between the winding-yarn-supplying part 23 and the collecting part 22 in the predetermined direction. Each of the pair of pressurizing rollers 46 extends in the lateral direction. The pair of pressurizing rollers 46 face each other in a direction which intersects both the predetermined direction and the lateral direction such that the carbon nanotube fiber 1 is pressed between them.

Thereby the carbon nanotube fiber 1 comprising a carbon nanotube central yarn 2 around which a carbon nanotube winding yarn 4 is wound is pressed when the carbon nanotube fiber 1 passes between the pair of pressurizing rollers 46.

Thus, both in the carbon nanotube untwisted yarns 3 of the carbon nanotube central yarn 2 and in the carbon nanotube winding yarn 4, the plurality of carbon nanotubes 12 aggregate to each other in addition to achieving much more close adhesion between the carbon nanotube central yarn 2 and the carbon nanotube winding yarn 4.

As a result, the mechanical properties of the carbon nanotube fiber 1 may reliably be further improved.

The sixth embodiment may also achieve the same functions and effects as those achieved by the first embodiment.

### 7. Seventh Embodiment

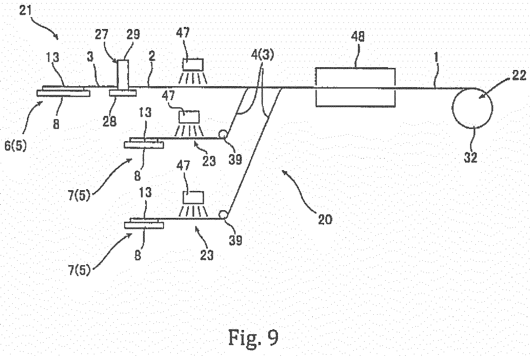

Next, with reference to Figs. 6 and 9, the seventh embodiment of the method for manufacturing a carbon nanotube fiber of the present invention will be explained. Incidentally, in the seventh embodiment, the same numbers are given to the same components as those in the first to sixth embodiments to omit the explanations for the components.

In the seventh embodiment, a carbon nanotube central yarn 2 and a carbon nanotube winding yarn 4 are each immersed in a metal-containing solution containing a metal and then are dried before the carbon nanotube winding yarn 4 is wound around the carbon nanotube central yarn 2.

The metal is not particularly limited but may be, for example, aluminum, titanium, chromium, iron, cobalt, nickel, copper, zinc, silver, tin, platinum, gold, an alloy containing them, etc. Among such metals, aluminum, titanium, copper, silver, gold, and an alloy containing them are preferable, and copper is more preferable.

The metal-containing solution may be, for example, a metal dispersion liquid in which a metal particle is dispersed, a metal alkoxide solution in which a metal alkoxide is dissolved, etc.

In such a case, as shown in Fig. 6, the central yarn-supplying part 21 and the winding-yarn-supplying part 23 of the fiber-manufacturing apparatus 20 each comprise an immersing part 38.

Incidentally, the immersing part 38 of the central yarn-supplying part 21 is indicated by an imaginary line in Fig. 6 and is located between the converging part 27 and the winding-yarn-supplying part 23.

A metal-containing solution is stored within each of the immersing baths 40 of the plurality of immersing parts 38.

The carbon nanotube central yarn 2 and the carbon nanotube winding yarn 4 are each immersed in a metal-containing solution in the corresponding immersing bath 40 by the rollers 39.

Thereby the carbon nanotube central yarn 2 and the carbon nanotube winding yarn 4 are immersed in a metal-containing solution in the corresponding immersing bath 40, and then dried to support a metal before the carbon nanotube winding yarn 4 is wound around the carbon nanotube central yarn 2.

Then the carbon nanotube winding yarn 4 which supports a metal is wound around the carbon nanotube central yarn 2 which supports the metal.

A metal may be vapor-deposited on both the carbon nanotube central yarn 2 and the carbon nanotube winding yarn 4 before the carbon nanotube winding yarn 4 is wound around the carbon nanotube central yarn 2.

In such a case, as shown in Fig. 9, the central yarn-supplying part 21 and the winding-yarn-supplying parts 23 of the fiber-manufacturing apparatus 20 each comprise a vapor-depositing part 47.

The vapor-depositing parts 47 of the central yarn-supplying part 21 are located between the converging part 27 and the winding-yarn-supplying part 23. The vapor-depositing parts 47 of the winding-yarn-supplying parts 23 are each located between each of the second carbon nanotube-supporting bodies 7 and the carbon nanotube central yarn 2.

The vapor-depositing part 47 is a publicly known device used for vapor-depositing a metal and is not particularly limited.

Thereby a metal on the carbon nanotube central yarn 2 and the carbon nanotube winding yarn 4 is evaporated by the vapor-depositing parts 47, and thus a metal film is formed on both the carbon nanotube central yarn 2 and the carbon nanotube winding yarn 4 before the carbon nanotube winding yarn 4 is wound around the carbon nanotube central yarn 2.

Then the carbon nanotube winding yarn 4 on which the metal film is formed is wound around the carbon nanotube central yarn 2 on which the metal film is formed.

Therefore, in addition to providing a carbon nanotube fiber 1 with metallic properties, the carbon nanotube central yarn 2 and the carbon nanotube winding yarn 4 may reliably be attached closely to each other when the carbon nanotube winding yarn 4 is wound around the carbon nanotube central yarn 2.

Further, as shown in Figs. 6 and 9, in the seventh embodiment, preferably, the carbon nanotube winding yarn 4 is wound around the carbon nanotube central yarn 2, and then they are heated.

In order to heat the carbon nanotube central yarn 2 around which the carbon nanotube winding yarn 4 is wound, for example, they may be heated in whole, or only the carbon nanotube winding yarn 4 of them may be heated locally.

In a case where the carbon nanotube central yarn 2 around which a carbon nanotube winding yarn 4 is wound is heated in whole, for example, they are heated by a publicly known heating furnace. In a case where only the carbon nanotube winding yarn 4 of the carbon nanotube central yarn 2 around which the carbon nanotube winding yarn 4 is wound is heated locally, the carbon nanotube winding yarn 4 is heated, for example, by high-frequency induction heating.

The heating temperature may be, for example, from 800°C, or preferably 1,000°C, to 1,500°C, or preferably 1,300°C.

Incidentally, the heating treatment is preferably carried out under a vacuum atmosphere or an inert gas atmosphere.

In such a case, the fiber-manufacturing apparatus 20 further comprises a heating part 48.

The heating part 24 is located between the winding-yarn-supplying part 23 and the collecting part 22. The heating part 24 is a publicly known heating furnace and is configured such that a carbon nanotube central yarn 2 around which the carbon nanotube winding yarn 4 is wound may pass through the inside of the heating part 24.

The metal supported by the carbon nanotube central yarn 2 and the metal supported by the carbon nanotube winding yarn 4 are melted together when the carbon nanotube central yarn 2 around which the carbon nanotube winding yarn 4 is wound is heated.

Thus, the respective carbon nanotubes 12 of the carbon nanotube central yarn 2 and the carbon nanotube winding yarn 4 may be reliably complexed with the metals.

The seventh embodiment may also achieve the same functions and effects as those achieved by the first embodiment.

### 8. Eighth Embodiment

Next, with reference to Fig. 6, the eighth embodiment of the method for manufacturing a carbon nanotube fiber of the present invention will be explained. Incidentally, in the eighth embodiment, the same numbers are given to the same components as those in the first to seventh embodiments to omit the explanations for the components.

In the eighth embodiment, a carbon nanotube central yarn 2 and a carbon nanotube winding yarn 4 are each immersed in a macromolecule-containing solution containing a macromolecular material and then are dried before the carbon nanotube winding yarn 4 is wound around the carbon nanotube central yarn 2.

The macromolecular material is not particularly limited but may be, for example, a thermoplastic resin, a thermosetting resin, etc., and a thermoplastic resin is preferable.

The thermoplastic resin may be, for example, polyester (for example, polyethylene terephthalate (PET)), polyamide, polyolefin (for example, polyethylene (PE), polypropylene (PP)), polystyrene, polyvinyl chloride, polyvinyl alcohol, polyvinylidene chloride, polyacrylonitrile, polyurethane, etc. Among such thermoplastic resins, polyester is preferable.

A conductive polymer, such as a poly-aniline and a poly-pyrrole, may also be used as a macromolecular material.

The macromolecule-containing solution may be, for example, a macromolecular material solution in which a macromolecular material is dissolved.

In such a case, as shown in Fig. 6, the central yarn-supplying part 21 and the winding-yarn-supplying part 23 of the fiber-manufacturing apparatus 20 each comprise an immersing part 38. The immersing baths 40 of the immersing parts 38 each store a macromolecule-containing solution.

The carbon nanotube central yarn 2 and the carbon nanotube winding yarn 4 are each immersed in the macromolecule-containing solution in the corresponding immersing bath 40 by the rollers 39.

Thereby the carbon nanotube central yarn 2 and the carbon nanotube winding yarn 4 are each immersed in the macromolecule-containing solution in the corresponding immersing baths 40 and then are dried to support the macromolecular material, before the carbon nanotube winding yarn 4 is wound around the carbon nanotube central yarn 2.

Then the carbon nanotube winding yarn 4 which supports the macromolecular material is wound around the carbon nanotube central yarn 2 which supports the macromolecular material.

Therefore, in addition to providing the carbon nanotube fiber 1 with the properties of the macromolecular material, the carbon nanotube central yarn 2 and the carbon nanotube winding yarn 4 may reliably be attached closely to each other when the carbon nanotube winding yarn 4 is wound around the carbon nanotube central yarn 2.

Alternatively, the carbon nanotube central yarn 2 and the carbon nanotube winding yarn 4 may be each stacked on a film made of a macromolecular material, or a macromolecular solution in which a macromolecular material is dissolved may be electrospinned onto both the carbon nanotube central yarn 2 and the carbon nanotube winding yarn 4, before the carbon nanotube winding yarn 4 is wound around the carbon nanotube central yarn 2.

Further, in the eighth embodiment, preferably, the carbon nanotube winding yarn 4 and the carbon nanotube central yarn 2 are heated after the carbon nanotube winding yarn 4 is wound around the carbon nanotube central yarn 2.

For example, the above-described method may be used in order to heat the carbon nanotube central yarn 2 around which a carbon nanotube winding yarn 4 is wound.

The heating temperature may be, for example, from 200°C, or preferably 250°C, to 600°C, or preferably 400°C.

In such a case, the fiber-manufacturing apparatus 20 further comprises the heating part 48.

When the carbon nanotube central yarn 2 around which the carbon nanotube winding yarn 4 is wound is heated, the macromolecular material of the carbon nanotube central yarn 2 and the macromolecular material of the carbon nanotube winding yarn 4 are melted together.

Therefore, the respective carbon nanotubes 12 of the carbon nanotube central yarn 2 and the carbon nanotube winding yarn 4 and the macromolecular material may be reliably complexed together.

The eighth embodiment may also achieve the same functions and effects as those achieved by the first embodiment.

The first to eighth embodiments may be suitably combined with each other.

### 9. Ninth Embodiment

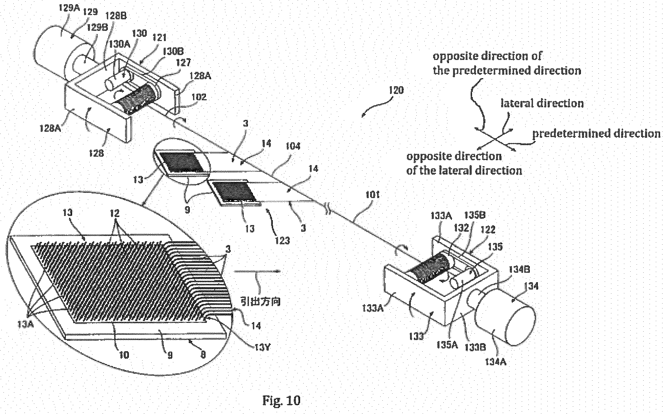

Next, with reference to Figs. 10 to 12, the ninth embodiment of the method for manufacturing a carbon nanotube fiber of the present invention will be explained. Incidentally, in the ninth embodiment, the same numbers are given to the same components as those in the first to eighth embodiment to omit the explanations for the components.

In the first to eighth embodiments, the core material is a carbon nanotube central yarn 2, but the core material is not limited to this.

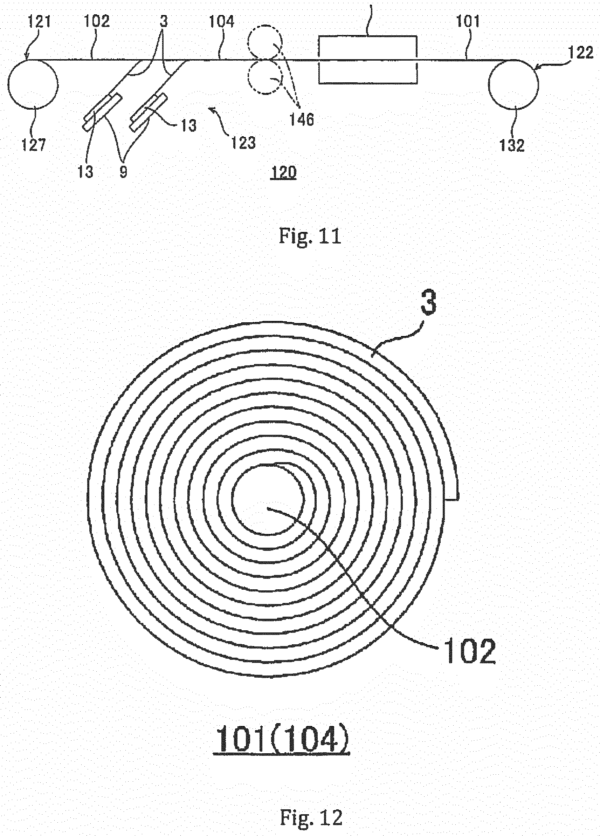

In the ninth embodiment, for example, as shown in Figs. 10 and 11, the method includes: a step of preparing a core material 102; a step of preparing a carbon nanotube array 13 (a plurality of carbon nanotubes 12) located on a substrate 8; a step of drawing a carbon nanotube untwisted yarn 3 from the carbon nanotube array 13 (a plurality of carbon nanotubes 12) on the substrate 8; a step of preparing a composite fiber precursor 104 by winding the carbon nanotube untwisted yarn 3 around the core material 102; and a step of heating the composite fiber precursor 104 to prepare a carbon nanotube composite fiber 101 as an example of a carbon nanotube fiber.

In such a manufacturing method, first, a core material 102 and a carbon nanotube untwisted yarn 3 are each prepared.

The core material 102 has a linear shape and is extending in a predetermined direction. The cross-sectional shape of the core material 102 (cross-sectional shape when the core material 102 is cut along a direction orthogonal to the predetermined direction) is not particularly limited, but may be, for example, a circle, a polygon (for example, a square, a hexagon, an octagon, etc.), etc. The cross-sectional shape of the core material 102 may be hollow or solid. Among such cross-sectional shapes of the core material 102, as shown in Fig. 12, a circular shape is preferable, and a solid circular shape is more preferable.

The raw material of the core material 102 is suitably selected in accordance with the application of the carbon nanotube composite fiber 101. For example, the raw material may be a glass fiber, a carbon fiber, a metal, a macromolecular material, etc. A metal and a macromolecular material are preferable among them.

The metal is not particularly limited, but may be, for example, aluminum, titanium, chromium, iron, cobalt, nickel, copper, zinc, silver, tin, platinum, gold, an alloy containing these metals, etc. Among such metals, aluminum, titanium, copper, silver, gold, and an alloy containing these metals are preferable, and copper is more preferable.

The macromolecular material is not particularly limited, but may be, for example, a thermoplastic resin, a thermosetting resin, etc., and a thermoplastic resin is preferable.

The thermoplastic resin is not particularly limited, but may be, for example, polyester (for example, polyethylene terephthalate (PET)), polyamide, polyolefin (for example, polyethylene (PE), polypropylene (PP)), polystyrene, polyvinyl chloride, polyvinyl alcohol, polyvinylidene chloride, polyacrylonitrile, polyurethane, etc. Among such thermoplastic resins, polyester is preferable.

When the cross-sectional shape of the core material 102 is circular, the core material 102 has an outer diameter of, for example, from 10 µm, or preferably 30 µm, to 2,000 µm, or preferably 1,500 µm.

More specifically, when the cross-sectional shape of the core material 102 is circular and the raw material of the core material 102 is a metal, the core material 102 has an outer diameter of, for example, from 10 µm, or preferably 30 µm, to 300 µm, or preferably 100 µm.

When the cross-sectional shape of the core material 102 is circular and the raw material of the core material 102 is a macromolecular material, the core material 102 has an outer diameter of, for example, from 100 µm, or preferably 500 µm, to 2,000 µm, or preferably 1,500 µm.

As shown in Figs. 1A to 1D, the carbon nanotube untwisted yarn 3 is the same untwisted yarn as that used in the first embodiment and is produced (prepared) by the same method as that in the first embodiment.

More specifically, as in the first embodiment, a carbon nanotube array 13 comprising a plurality of carbon nanotubes 12 which are located on a substrate 8 and are vertically oriented to the substrate 8 is prepared.

As shown in Fig. 1D, as in the first embodiment, the carbon nanotube untwisted yarn 3 is formed by drawing a plurality of carbon nanotubes 12 from the carbon nanotube array 13 on the substrate 8 such that the plurality of carbon nanotubes 12 are continuously connected.

Thereby, the carbon nanotube untwisted yarn 3 are formed of a plurality of linearly continued carbon nanotubes 12. In the carbon nanotube untwisted yarn 3, each of the plurality of carbon nanotubes 12 is oriented along the feeding direction of the carbon nanotube untwisted yarn 3.

Next, as necessary, the core material 102 and the carbon nanotube untwisted yarn 3 are pretreated in order to attach them closely to each other.

The pretreatment may be, for example, a treatment of each of the surfaces of the core material 102 and the carbon nanotube untwisted yarn 3. Specifically, the pretreatment may be a plasma treatment, a UV treatment, etc. Incidentally, the surface treatment is preferably carried out under a vacuum or an inert gas atmosphere. Thereby the properties of the surfaces of the core material 102 and the carbon nanotube untwisted yarn 3 are each modified, and thus their adhesion is improved.

Next, as shown in Fig. 10 and 12, the carbon nanotube untwisted yarn 3 is wound around the circumferential surface of the core material 102 to prepare a composite fiber precursor 104.

In order to wind the carbon nanotube untwisted yarn 3 around the core material 102, as shown in Fig. 10, one end of the carbon nanotube untwisted yarn 3 is fixed to the core material 102 (or to the carbon nanotube untwisted yarn 3 which is wound around the circumferential surface of the core material 102), and then the core material 102 is rotated around the axis line of the core material 102 as its rotational center.

The carbon nanotube untwisted yarn 3 is preferably wound spirally around the core material 102. In such a case, one end of the carbon nanotube untwisted yarn 3 (one end of the carbon nanotube 12) is fixed to the core material 102, and then the core material 102 is moved in the predetermined direction while the core material 102 is rotated around the axis line of the core material 102 as its rotational center.

Thereby, the carbon nanotube untwisted yarn 3 is wound around the circumferential surface of the core material 102 for at least one turn, preferably for a plurality of turns.

When the carbon nanotube untwisted yarn 3 is wound around the circumferential surface of the core material 102 for a plurality of turns, as shown in Fig. 12, a plurality of carbon nanotube untwisted yarns 3 are stacked on the circumference of the core material 102 over the entire circumferential surface of the core material 102.

The number of the stacked layers of the carbon nanotube untwisted yarn 3 is, for example, from two, or preferably five, to 50, or preferably 20.

If the number of the stacked layers of the carbon nanotube untwisted yarn 3 is not less than the lower limit, an after-mentioned carbon nanotube composite fiber 101 may reliably have desired physical properties. If the number of the stacked layers of the carbon nanotube untwisted yarn 3 is not more than the upper limit, the operation for winding the carbon nanotube untwisted yarn 3 around the core material 102 may be facilitated.

In more detail, as shown in Fig. 10, the carbon nanotube array 13 comprises a plurality of rows 13A along a direction orthogonal to the drawing direction in which the carbon nanotube untwisted yarn 3 is drawn, and each of the rows 13A comprises a plurality of carbon nanotubes 12 located along the drawing direction. Thereby the carbon nanotube array 13 is formed in a substantially sheet shape.

Therefore, the plurality of carbon nanotube untwisted yarns 3 may be collectively drawn from the carbon nanotube array 13. In this case, the carbon nanotubes 12 of the plurality of rows 13A are drawn at the same time and in parallel (see an enlarged view in Fig. 10). Thereby the plurality of carbon nanotube untwisted yarns 3 are located in parallel along a direction which intersects the feeding direction of the carbon nanotube untwisted yarn 3. The plurality of carbon nanotube untwisted yarns 3 which are located in parallel in this way have a substantially sheet shape and are configured as a carbon nanotube sheet 14.

Then, in order to wind the plurality of carbon nanotube untwisted yarns 3 around the core material 102 at the same time, for example, each end of the plurality of carbon nanotube untwisted yarns 3 (one end of the carbon nanotube sheet 14) is fixed to the core material 102 (or to the carbon nanotube untwisted yarn 3 wound around the circumference of the core material 102), and then the core material 102 is rotated.

One substrate 8 may be prepared to draw a plurality of carbon nanotube untwisted yarns 3 (the carbon nanotube sheet 14) from one carbon nanotube array 13 which corresponds to the substrate 8. However, a plurality of substrates 8 may be prepared to draw a plurality of carbon nanotube untwisted yarns 3 (the carbon nanotube sheet 14) from a plurality of carbon nanotube arrays 13 which each correspond to the plurality of substrates 8. Incidentally, Fig. 10 shows a configuration in which two substrates 8 are prepared, and then a plurality of carbon nanotube untwisted yarns 3 (two carbon nanotube sheets 14) are drawn from each of the two carbon nanotube arrays 13 on the substrates 8.

Thereby, as shown in Fig. 12, a composite fiber precursor 104 which comprises a core material 102 and a carbon nanotube untwisted yarn 3 wound around the circumferential surface of the core material 102 is prepared. That is, the composite fiber precursor 104 is a core material 102 around which a carbon nanotube untwisted yarn 3 is wound.

In the composite fiber precursor 104, the core material 102 is located substantially in the center of the composite fiber precursor 104, and the carbon nanotube untwisted yarn 3 is stacked around the entire circumferential surface of the core material 102 to a substantially constant thickness (size in the direction of the diameter) along the circumferential direction of the core material 102.

Next, as shown in Fig. 11, the composite fiber precursor 104 is heat-treated.

In order to heat-treat the composite fiber precursor 104, for example, the entire composite fiber precursor 104 may be heat-treated, or only the carbon nanotube untwisted yarn 3 in the composite fiber precursors 104 may be heat-treated locally.

For example, the composite fiber precursor 104 is heated by a publicly known heating furnace when the entire composite fiber precursor 104 is heated. For example, the carbon nanotube untwisted yarn 3 is heated by high-frequency induction heating when only the carbon nanotube untwisted yarn 3 in the composite fiber precursor 104 is heated locally.

The heating temperature of the composite fiber precursor 104 (carbon nanotube untwisted yarn 3) may be, for example, from 200°C, or preferably 250°C, to 1,500°C, or preferably 1,300°C.

More specifically, when the core material 102 is made of a metal, the heating temperature of the composite fiber precursor 104 (carbon nanotube untwisted yarn 3) is, for example, from 800°C, or preferably 1,000°C, to 1,500°C, or preferably 1,300°C.

When the core material 102 is made of a macromolecular material, the heating temperature of the composite fiber precursor 104 (carbon nanotube untwisted yarn 3) is, for example, from 200°C, or preferably 250°C, to 600°C, or preferably 400°C.

Incidentally, the heat-treatment is preferably carried out under a vacuum atmosphere or an inert gas atmosphere.

Accordingly, as shown in Fig. 12, the core material 102 and the carbon nanotube untwisted yarn 3 are complexed together. That is, the core material 102 and/or the carbon nanotube untwisted yarn 3 are melted by heat and are strongly adhered to each other.

As described above, a carbon nanotube composite fiber 101 is prepared.

The carbon nanotube composite fiber 101 comprises a core material 102 and a carbon nanotube untwisted yarn 3 which is wound around the core material 102.

In such a carbon nanotube composite fiber 101, the core material 102 has a volume percentage (the core material 102 / the carbon nanotube composite fiber 101 × 100) of, for example, from 95.0 volume %, or preferably 98.0 volume %, to 99.99 volume %, or preferably 99.98 volume %.

Also, in the carbon nanotube composite fiber 101, the carbon nanotube untwisted yarn 3 has a volume percentage (the carbon nanotube untwisted yarn 3 / the carbon nanotube composite fiber 101 × 100) of, for example, from 0.01 volume %, or preferably 0.02 volume %, to 5.0 volume %, or preferably 2.0 volume %.

More specifically, when the core material 102 is made of a metal, the volume percentage of the core material 102 to the carbon nanotube composite fiber 101 is, for example, from 95.0 volume %, or preferably 98.0 volume %, to 99.9 volume %, or preferably 99.5 volume %, and the volume percentage of the carbon nanotube untwisted yarn 3 to the carbon nanotube composite fiber 101 is, for example, from 0.01 volume %, or preferably 0.05 volume %, to 5.0 volume %, or preferably 2.0 volume %.

When the core material 102 is made of a macromolecular material, the volume percentage of the core material 102 to the carbon nanotube composite fiber 101 is, for example, from 99.00 volume %, or preferably 99.50 volume %, to 99.99 volume %, or preferably 99.98 volume %, and the volume percentage of the carbon nanotube untwisted yarn 3 to the carbon nanotube composite fiber 101 is, for example, from 0.01 volume %, or preferably 0.02 volume %, to 1.00 volume %, or preferably 0.05 volume %.

Such a carbon nanotube composite fiber 101 is used for various industrial products, such as a textile (sheet) for which a carbon fiber is used, a conductive line material of an electric apparatus (for example, a motor, a transformer, a sensor, etc.), and a raw material for sporting goods (for example, a golf shaft, a tennis racket, a shaft of a fishing rod, etc.).

As shown in Figs. 10 and 11, for example, the method for manufacturing such a carbon nanotube composite fiber is continuously carried out by a composite-fiber-manufacturing apparatus 120 which is an example of an apparatus for manufacturing a carbon nanotube fiber.

The composite-fiber-manufacturing apparatus 120 is an apparatus for manufacturing a carbon nanotube composite fiber. The composite-fiber-manufacturing apparatus 120 comprises a feeding part 121, a collecting part 122, a supplying part 123, and a heating part 124.

As shown in Fig. 10, the feeding part 121 is configured to feed a core material 102 in the predetermined direction and comprises a feeding rotary part 128, a feeding shaft 127, a shaft driving part 130, and a rotary driving part 129.

The feeding rotary part 128 substantially has a U-shape in a plane view and is opened toward the predetermined direction. The feeding rotary part 128 has a pair of shaft-supporting parts 128A and a connecting part 128B in an integrated manner.

The pair of shaft-supporting parts 128A are located with a space between them in the lateral direction which is orthogonal to the predetermined direction. Each of the pair of shaft-supporting parts 128A substantially has a board shape extending in the predetermined direction.

The connecting part 128B connects between ends of the pair of shaft-supporting parts 128A on the opposite side to the predetermined direction. The connecting part 128B substantially has a board shape extending in the lateral direction.

The feeding shaft 127 is located between ends of the pair of shaft-supporting parts 128A on the predetermined direction side. The feeding shaft 127 has a substantially cylindrical shape extending in the lateral direction. Each of both ends of the feeding shaft 127 is rotatably supported by corresponding one of the shaft-supporting parts 128A. Incidentally, the core material 102 is wound around the feeding shaft 127 for a plurality of turns.

The shaft driving part 130 is configured to supply driving force to the feeding shaft 127 when electric power is externally supplied to the shaft driving part 130. The shaft driving part 130 is located between the pair of shaft-supporting parts 128A in the lateral direction and is located between the feeding shaft 127 and the connecting part 128B in the predetermined direction.

The shaft driving part 130 comprises a motor shaft 130A and a driving-force-transmitting belt 130B.

The motor shaft 130A is rotatably supported by one of the pair of shaft-supporting parts 128A and rotates when driving force is supplied from a motor body which is not illustrated.

The driving-force-transmitting belt 130B is a publicly known endless belt and is stretched between one end of the motor shaft 130A on the lateral direction side and one end of the feeding shaft 127 on the lateral direction side.

The rotary driving part 129 is configured to supply driving force to the feeding rotary part 128 when electric power is externally supplied. The rotary driving part 129 is located on the opposite side to the predetermined direction relative to the feeding rotary part 128.

The rotary driving part 129 comprises, for example, a publicly known motor. The rotary driving part 129 includes a motor body 129A and a motor shaft 129B which is rotatably supported by the motor body 129A. One end of the motor shaft 129B on the predetermined direction side is fixed to the laterally central part of the connecting part 128B of the feeding rotary part 128. Thereby, the feeding rotary part 128 may be rotated around the motor shaft 129B, i.e., an axis line along the predetermined direction as its rotational center.

The collecting part 122 is configured to collect a core material 102 fed from the feeding part 121 and is located at a distance to the feeding part 121 in the predetermined direction. The collecting part 122 comprises a collecting rotary part 133, a collecting shaft 132, a shaft driving part 135, and a rotary driving part 134.

The collecting rotary part 133 substantially has a U-shape in a plane view, which is opened toward the opposite direction to the predetermined direction. The collecting rotary part 133 integrally has a pair of shaft-supporting parts 133A and a connecting part 133B.

The pair of shaft-supporting parts 133A are located at a distance from each other in the lateral direction. Each of the pair of shaft-supporting parts 133A substantially has a board shape extending in the predetermined direction.

The connecting part 133B connects between ends of the pair of shaft-supporting parts 133A on the predetermined direction side. The connecting part 133B substantially has a board shape extending in the lateral direction.

The collecting shaft 132 is located between ends of the pair of shaft-supporting parts 133A on the opposite side to the predetermined direction. The collecting shaft 132 has a substantially cylindrical shape extending in the lateral direction. Each of both ends of the collecting shaft 132 is rotatably supported by corresponding one of the shaft-supporting parts 133A.

The shaft driving part 135 is configured to supply driving force to the collecting shaft 132 when electric power is externally supplied. The shaft driving part 135 is located between the pair of shaft-supporting parts 133A in the lateral direction and is located between the collecting shaft 132 and the connecting part 133B in the predetermined direction.

The shaft driving part 135 comprises a motor shaft 135A and a driving-force-transmitting belt 135B.

The motor shaft 135A is rotatably supported by one of the pair of shaft-supporting parts 133A and rotates when driving force is supplied from a motor body which is not illustrated.

The driving-force-transmitting belt 135B is a publicly known endless belt and is stretched between one end of the motor shaft 135A on the lateral direction side and one end of the collecting shaft 132 on the lateral direction side.

The rotary driving part 134 is configured to supply driving force to the collecting rotary part 133 when electric power is externally supplied to the rotary driving part 134. The rotary driving part 134 is located on the predetermined direction side relative to the collecting rotary part 133.

The rotary driving part 134 comprises, for example, a publicly known motor. The rotary driving part 134 includes a motor body 134A and a motor shaft 134B which is rotatably supported by the motor body 134A. One end of the motor shaft 134B on the opposite side to the predetermined direction is fixed to the laterally central part of the connecting part 133B of the collecting rotary part 133. Thereby the collecting rotary part 133 may be rotated around the motor shaft 134B, i.e., an axis line along the predetermined direction as its rotational center. Incidentally, the axis of the rotation of the collecting rotary part 133 and the axis of the rotation of the feeding rotary part 128 coincide with each other.

The supplying part 123, which will be explained below in detail, is configured to supply a carbon nanotube untwisted yarn 3 to a core material 102 located between the feeding part 121 and the collecting part 122.

The supplying part 123 comprises substrates 8 and a drawing device which is not illustrated.

A plurality of substrates 8 are located between the feeding part 121 and the collecting part 122. Specifically, there are two substrates 8. The plurality of substrates 8 are located at a distance therebetween in the predetermined direction. As described above, each of the plurality of substrates 8 supports a carbon nanotube array 13.

The carbon nanotube array 13 has a substantially rectangular shape in a planar view. In the carbon nanotube array 13, a plurality of rows 13A, each of which comprises a plurality of carbon nanotubes 12 and extends along the drawing direction, are located in a direction orthogonal to the drawing direction.

In each of the plurality of rows 13A, the carbon nanotubes 12 which are located at the most downstream positions (nearest from the core material 102) in the drawing direction are linearly located along a direction orthogonal to the drawing direction, and thus constitute a downstream end 13Y of the carbon nanotube array 13 on the drawing direction side.

As shown in Fig. 11, the heating part 124 is located between the supplying part 123 and the collecting part 122 in the predetermined direction. The heating part 124 is a publicly known heating furnace and is configured such that the core material 102 may pass through the inside of the heating part 124.

In such composite-fiber-manufacturing apparatus 120, as shown in Figs. 10 and 11, first, a core material 102 which is wound around the feeding shaft 127 is drawn in the predetermined direction from the feeding shaft 127. One end of the core material 102 on the predetermined direction side is fixed to the collecting shaft 132 after the core material 102 passes through the heating part 124. Thereby the core material 102 is stretched between the feeding part 121 and the collecting part 122.

Next, as shown in Fig. 10, a plurality of carbon nanotube untwisted yarns 3 (carbon nanotube sheet 14) are drawn from each of the carbon nanotube arrays 13 of a plurality of substrates 8 by the drawing device (not shown).

More specifically, the downstream end 13Y of the carbon nanotube array 13 on the drawing direction side is collectively held by the drawing device (not shown) and is drawn toward the core material 102.

Thereby, in each of the plurality of rows 13A, a plurality of carbon nanotubes 12 are continuously drawn, and thus a plurality of carbon nanotube untwisted yarns 3 (carbon nanotube sheet 14) are formed. At this moment, the plurality of carbon nanotube untwisted yarns 3 are located in parallel along a direction orthogonal to the drawing direction and substantially form a sheet shape.

One end of each of the plurality of carbon nanotube untwisted yarns 3 (one end of the carbon nanotube sheet 14) is fixed to the core material 102 which is located between the feeding part 121 and the heating part 124.

Next, electric power is supplied to the rotary driving part 134 of the collecting part 122 while electric power is supplied to the rotary driving part 129 of the feeding part 121.

Thereby the motor shaft 129B of the rotary driving part 129 and the motor shaft 134B of the rotary driving part 134 are each rotated clockwise when they are seen from the predetermined direction side. Along with the rotations, the feeding rotary part 128 and the collecting rotary part 133 are rotated clockwise when they are seen from the predetermined direction side. Incidentally, the rotating speeds of the feeding rotary part 128 and the collecting rotary part 133 are the same.

Accordingly, the core material 102 is rotated clockwise when it is seen from the predetermined direction side. In this case, the rotating speed (peripheral velocity) of the core material 102 is, for example, from 0.1 m/min, or preferably 0.5 m/min, to 10 m/min, preferably 6.0 m/min, or more preferably 3.0 m/min.

Thereby, the carbon nanotube untwisted yarns 3 (carbon nanotube sheet 14) whose one ends are fixed to the core material 102 are wound around the circumferential surface of the core material 102 when the core material 102 is rotated. Then the carbon nanotube untwisted yarns 3 are further drawn from the carbon nanotube array 13 and are continuously supplied to the core material 102.

Then electric power is supplied to the shaft driving part 130 of the feeding part 121 and to the shaft driving part 135 of the collecting part 122. Then the motor shaft 130A of the shaft driving part 130 and the motor shaft 135A of the shaft driving part 135 are each rotated clockwise when they are seen from the opposite side to the lateral direction. Along with the rotations, the feeding shaft 127 and the collecting shaft 132 are each rotated clockwise when they are seen from the opposite side to the lateral direction.

Thereby the core material 102 is fed from the feeding shaft 127 and is moved in the predetermined direction in a state where tensile force is applied to the core material 102. Then the core material 102 is rolled up by the collecting shaft 132. Therefore, the core material 102 is continuously moved from the feeding part 121 to the collecting part 122 while the core material 102 is rotated.

In this case, the moving speed of the core material 102 is, for example, from 0.1 m/min, or preferably 0.5 m/min, to 10 m/min, preferably 6.0 m/min, or more preferably 3.0 m/min.

Accordingly, the plurality of carbon nanotube untwisted yarns 3 are spirally wound around the core material 102.

Thereby, a composite fiber precursor 104 comprising a plurality of carbon nanotube untwisted yarns 3 are stacked on the circumferential surface of the core material 102 is prepared.

Then, as shown in Fig. 11, the composite fiber precursor 104 arrives at the inside of the heating part 124 along with the movement of the core material 102. The composite fiber precursor 104 passes through the inside of the heating part 124 while the precursor is rotated. Then the composite fiber precursor 104 is heated to the above-mentioned temperature by the heating part 124.

Thereby a core material 102 and a carbon nanotube untwisted yarn 3 are complexed together to prepare a carbon nanotube composite fiber 101. Then the carbon nanotube composite fiber 101 is rolled up around the collecting shaft 132 by the rotations of the feeding shaft 127 and the collecting shaft 132.

As described above, the manufacture of the carbon nanotube composite fiber 101 by the composite-fiber-manufacturing apparatus 120 is completed.

In the ninth embodiment, as shown in Figs. 11 and 12, the composite fiber precursor 104 comprising a core material 102 around which a carbon nanotube untwisted yarn 3 is wound is heated. Therefore, the core material 102 and the carbon nanotube untwisted yarn 3 may be complexed together, and the mechanical properties of the carbon nanotube composite fiber 101 may be reliably improved.

The composite fiber precursor 104 may be prepared by a simple method in which a carbon nanotube untwisted yarn 3 is wound around a core material 102. In the composite fiber precursor 104, the core material 102 is reliably located at the center part, and the carbon nanotube untwisted yarn 3 is located around the core material 102. Therefore, in the carbon nanotube composite fiber 101, the core material 102 may be reliably located at the central part, and the carbon nanotube untwisted yarn 3 may be located around the core material 102. As a result, in addition to further improving the mechanical properties, the carbon nanotube composite fiber 101 may acquire well-balanced properties of the core material 102 and the carbon nanotube untwisted yarn 3.

Further, as shown in Fig. 1D, the carbon nanotube untwisted yarn 3 is prepared by drawing it from a plurality of carbon nanotubes 12 which are oriented orthogonally (oriented vertically) to the substrate 8. Therefore, in the carbon nanotube untwisted yarn 3, each of the plurality of carbon nanotubes is oriented along the feeding direction of the carbon nanotube untwisted yarn 3.

As a result, as shown in Fig. 12, even in a state where a carbon nanotube untwisted yarn 3 is wound around a core material 102, the orientation of carbon nanotubes 12 may reliably be ensured, and the properties based on the carbon nanotube untwisted yarn 3 may reliably be achieved in the carbon nanotube composite fiber 101.

Further, as shown in Fig. 1C, a plurality of carbon nanotubes 12 grow from the catalyst layer 11 which is located on a substrate 8. Therefore, the plurality of carbon nanotubes 12 which are oriented vertically to the substrate 8 may reliably be prepared.

In the composite-fiber-manufacturing apparatus 120, as shown in Figs. 10 and 11, despite its simple configuration, a carbon nanotube untwisted yarn 3 may be wound around a core material 102 by rotating the feeding part 121 and the collecting part 122, and then the core material 102 around which a carbon nanotube untwisted yarn 3 is wound may be heated by the heating part 124.

Therefore, a carbon nanotube composite fiber 101 which comprises a core material 102 around which a carbon nanotube untwisted yarn 3 is wound and in which the core material 102 and the carbon nanotube untwisted yarn 3 are complexed together may be efficiently manufactured.

### 10. Other Embodiments

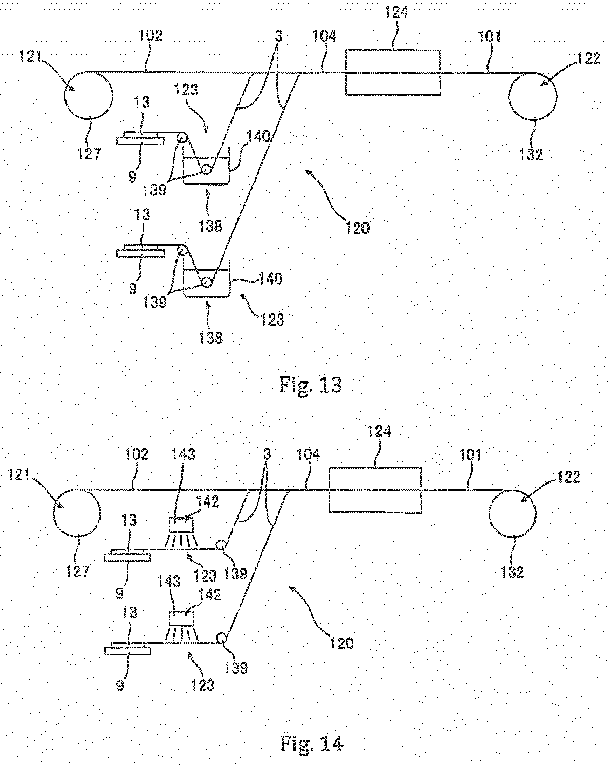

Next, with reference to Figs. 13 and 14, a method for manufacturing a carbon nanotube fiber according to other embodiments of the present invention will be explained.

In the above-mentioned ninth embodiment, for example, the surface treatment of a core material 102 and a carbon nanotube untwisted yarn 3 is mentioned as a pretreatment carried out before the carbon nanotube untwisted yarn 3 is wound around the core material 102. However, the pretreatment is not limited to the mentioned surface treatment.

For example, when the core material 102 is made of a metal, the carbon nanotube untwisted yarn 3 may be immersed in a metal-containing solution containing a metal and then be dried, before the carbon nanotube untwisted yarn 3 is wound around the core material 102.

The metal may be the same as the metals described above, for example. The metal is preferably the same metal as the metal which constitutes a core material 102.

The metal-containing solution may be, for example, a metal dispersion liquid in which metal particles are dispersed, a metal alkoxide solution in which a metal alkoxide is dissolved, etc.

In such a case, as shown in Fig. 13, the supplying part 123 of the composite-fiber-manufacturing apparatus 120 comprises a plurality of immersing parts 138.

The plurality of immersing parts 138 correspond to the plurality of substrates 8, respectively, and are located between the substrates 8 and the core material 102.

Each of the plurality of immersing parts 138 comprises an immersing bath 140 and a plurality of rollers 139.

The immersing bath 140 substantially has a box shape which is opened upward. The immersing bath 140 stores a metal-containing solution in it.

Each of the plurality of rollers 139 is suitably located in a predetermined position such that the carbon nanotube untwisted yarn 3 may be immersed in the metal-containing solution in the immersing bath 140.

Accordingly, a carbon nanotube untwisted yarn 3 drawn from a carbon nanotube array 13 is immersed in the metal-containing solution in the immersing bath 140 and then is dried. Thereby a metal is supported on the carbon nanotube untwisted yarn 3.

Then the carbon nanotube untwisted yarns 3 which supports a metal is wound around the core material 102 which is made of a metal.

Further, as shown in Fig. 14, when the core material 102 is made of a metal, a metal may be vapor-deposited to a carbon nanotube untwisted yarn 3 before the carbon nanotube untwisted yarn 3 is wound around a core material 102.

In such a case, the supplying part 123 of the composite-fiber-manufacturing apparatus 120 comprises a plurality of vapor-depositing parts 142.

The plurality of vapor-depositing parts 142 correspond to the plurality of substrates 8, respectively, and are located between the substrates 8 and the core material 102.

Each of the plurality of vapor-depositing parts 142 comprises a vapor-depositing device 143 and a roller 139.

The vapor-depositing device 143 is a publicly known apparatus used for metal vapor deposition and is not particularly limited.

The roller 139 is suitably located in a predetermined position such that a carbon nanotube untwisted yarn 3 having a vapor-deposited metal is moved toward a core material 102.

Accordingly, a metal is vapor-deposited to a carbon nanotube untwisted yarn 3 drawn from a carbon nanotube array 13 by the vapor-depositing device 143. Thereby a metal film is formed on the carbon nanotube untwisted yarn 3.

Then the carbon nanotube untwisted yarn 3 on which a metal film is formed is wound around a core material 102 which is made of a metal.

In such an embodiment, a core material 102 and a carbon nanotube untwisted yarn 3 may reliably be attached closely to each other because a carbon nanotube which has a metal (a metal film) is wound around the core material which is made of a metal. Further, when a composite fiber precursor 104 is heated, a core material 102 and a carbon nanotube untwisted yarn 3 may be firmly complexed together, because the metals (the metal film) of the core material 102 and the carbon nanotube untwisted yarn 3 are melted together and enter between the plurality of carbon nanotubes 12.

Also, when a core material 102 is made of a macromolecular material, as shown in Fig. 13, a carbon nanotube untwisted yarn 3 may be immersed in a macromolecule-containing solution containing a macromolecular material and then may be dried, before the carbon nanotube untwisted yarn 3 is wound around a core material 102.

The macromolecular material may be, for example, the same macromolecular material as described above. The macromolecular material is preferably the same material as a macromolecular material which constitutes the core material 102.

The macromolecule-containing solution may also be, for example, a macromolecular material solution in which a macromolecular material is dissolved.

In this case, instead of a metal-containing solution, a macromolecule-containing solution is stored in the immersing bath 140 of each of the immersing parts 138.

Then a carbon nanotube untwisted yarn 3 drawn from the carbon nanotube array 13 is immersed in the macromolecule-containing solution in the immersing bath 140 and then is dried. Accordingly a macromolecular material is supported on the carbon nanotube untwisted yarn 3.

Then the carbon nanotube untwisted yarn 3 which supports a macromolecular material is wound around a core material 102 which is made of a macromolecular material.

When the core material 102 is made of a macromolecular material, a carbon nanotube untwisted yarn 3 may be stacked on a film which is made of a macromolecular material, or a macromolecular solution in which a macromolecular material is dissolved may be electrospinned on the carbon nanotube untwisted yarn 3, as a pretreatment carried out before a carbon nanotube untwisted yarn 3 is wound around a core material 102.

In such an embodiment, a core material 102 and a carbon nanotube untwisted yarn 3 may reliably be attached closely to each other because the carbon nanotube which has a macromolecular material is wound around the core material 102 which is made of a macromolecular material. Further, when a composite fiber precursor 104 is heated, the core material 102 and the carbon nanotube untwisted yarn 3 may be firmly complexed together, because the macromolecular materials of the core material 102 and the carbon nanotube untwisted yarn 3 are melted together, and then the macromolecule resin enters between the plurality of carbon nanotubes 12.

The other embodiments as described above may also achieve the same functions and effects as those achieved by the above-described embodiments.

### 11. Modified Embodiment

As shown in Fig. 11, after a carbon nanotube untwisted yarn 3 is wound around a core material 102 to prepare a composite fiber precursor 104, the composite fiber precursor 104 may be pressed before the heat-treatment.

In such a case, as indicated by an imaginary line in Fig. 11, the composite-fiber-manufacturing apparatus 120 comprises a pair of pressurizing rollers 146.

The pair of pressurizing rollers 146 are located between the supplying part 123 and the heating part 124 in the predetermined direction. Each of the pair of pressurizing rollers 146 extends in the lateral direction. The pair of pressurizing rollers 146 face each other in a direction which intersects both the predetermined direction and the lateral direction such that a composite fiber precursor 104 is pressed between them.

Thereby a composite fiber precursor 104 which comprises a core material 102 around which a carbon nanotube untwisted yarn 3 is wound is pressed when the composite fiber precursor 104 passes between the pair of pressurizing rollers 146.

Therefore, in addition to further improving close attachment between a core material 102 and a carbon nanotube untwisted yarn 3, a plurality of carbon nanotubes 12 in a carbon nanotube untwisted yarn 3 aggregate to each other.

Then the composite fiber precursor 104 is heated by the heating part 124, and thereby a carbon nanotube composite fiber 101 is prepared.

As a result, the mechanical properties of the carbon nanotube composite fiber 101 may reliably be further improved.

Such a modified embodiment may also achieve the same functions and effects as those achieved by the ninth embodiment described above. Incidentally, the ninth embodiment, the other embodiments and the modified embodiment may be appropriately combined with each other.

### Examples

Examples are shown below to further explain the present invention, but the present invention is not limited to the examples. Specific numerical values used in the following description, such as a blend ratio (content percentage), a physical-property value, and a parameter may be replaced with an upper limit (a numerical value defined by using the term "to" or "to less than") or a lower limit (a numerical value defined by using the term "from" or "from more than") of the blend ratio (content percentage), the physical-property value, and the parameters which are given in the section "DESCRIPTION OF EXAMPLE EMBODIMENTS" and correspond to the specific numerical values.

### Example 1

A silicon dioxide film was deposited on a substrate made of stainless steel, and then iron was vapor-deposited as a catalyst layer on the silicon dioxide film.

Next, the substrate was heated to a predetermined temperature, and then source gas (acetylene gas) was supplied to the catalyst layer. Thereby, a carbon nanotube array having a substantially rectangular shape in a plane view was formed on the substrate. In the carbon nanotube array, a plurality of carbon nanotubes extended such that they were substantially parallel to each other and were oriented orthogonally (oriented perpendicularly) to the substrate. The carbon nanotubes had an average outer diameter of about 12 nm. The carbon nanotubes had an average length of about 300 µm. The plurality of carbon nanotubes in the carbon nanotube array had a bulk density of about 30mg/cm³.

Accordingly, a first carbon nanotube-supporting body comprising a substrate and a carbon nanotube array was prepared.

The carbon nanotube array of the first carbon nanotube-supporting body had a length of 200 mm in the longitudinal direction (in the predetermined direction) and a width of 15 mm in the lateral direction.

A second carbon nanotube-supporting body was prepared in the same manner as for the production of the first carbon nanotube-supporting body.

The carbon nanotube array of the second carbon nanotube-supporting body had a length of 200 mm in the longitudinal direction and a width of 15 mm in the lateral direction.

In the carbon nanotube array of the first carbon nanotube-supporting body, a plurality of carbon nanotubes located at one end on the predetermined direction side were collectively held by the drawing device over the full width and then were drawn in the predetermined direction. Thereby a plurality of carbon nanotube untwisted yarns were drawn from the carbon nanotube array of the first carbon nanotube-supporting body. Each of the plurality of carbon nanotube untwisted yarns had a diameter (the carbon nanotube sheet had a thickness) of about 60 nm to 80 nm.

Next, as shown in Fig. 2, the plurality of carbon nanotube untwisted yarns were bundled by passing them between the pair of shaft parts 29 of the converging part 27 to prepare a carbon nanotube central yarn.

Next, one end of the carbon nanotube central yarn on the predetermined direction side was fixed to the collecting shaft 32 of the collecting part 22. The carbon nanotube central yarn was stretched from the first carbon nanotube-supporting body to the collecting part 22.

A plurality of carbon nanotubes located at one end of the carbon nanotube array of the second carbon nanotube-supporting body on the longitudinal direction side were collectively held by the drawing device over the full width and were drawn in the longitudinal direction. Thereby a plurality of carbon nanotube untwisted yarns (hereafter referred to as "carbon nanotube winding yarns") were drawn from the carbon nanotube array of the second carbon nanotube-supporting body. The plurality of carbon nanotube winding yarns were arrayed in parallel along a direction orthogonal to the feeding direction of the carbon nanotube winding yarn and thereby substantially forms a sheet shape. Each of the plurality of carbon nanotube winding yarns had a diameter (the carbon nanotube sheet had a thickness) of about 60 nm to 80 nm.

Next, one end of each of the plurality of carbon nanotube winding yarns was fixed to the carbon nanotube central yarn located between the converging part 27 and the collecting part 22.

Then the collecting shaft 32 was rotated while the rotating part 33 was rotated. Thereby the carbon nanotube central yarn was rotated and twisted while the carbon nanotube central yarn is moved in the predetermined direction. Then the carbon nanotube central yarn was rolled up around the collecting axis.

The twisted carbon nanotube central yarn had a diameter of about 24 µm to 27 µm. The carbon nanotube central yarn had a density of about 0.8 g/cm³.

At that time, the plurality of carbon nanotube winding yarns were spirally wound around the circumferential surface of the carbon nanotube central yarn along with the rotation and movement of the carbon nanotube central yarn.

Accordingly, a carbon nanotube fiber which comprises the carbon nanotube central yarn around which about 100 layers of a carbon nanotube winding yarn are stacked was obtained. The carbon nanotube fiber had a diameter of about 30 µm to 35 µm. The carbon nanotube fiber had a density of 0.9 g/cm³.

### Example 2

A first carbon nanotube-supporting body comprising a carbon nanotube array having a length in the longitudinal direction (the predetermined direction) of 200 mm and a width in the lateral direction of 40 mm and a second carbon nanotube-supporting body comprising a carbon nanotube array having a length in the longitudinal direction (the predetermined direction) of 200 mm and a width in the lateral direction of 15 mm were prepared by using a method similar to the method used in Example 1.

Next, a plurality of carbon nanotube untwisted yarns were drawn from the carbon nanotube array of the first carbon nanotube-supporting body and then were bundled and twisted to prepare a carbon nanotube central yarn.

The twisted carbon nanotube central yarn had a diameter of about 40 µm to 45 µm. The carbon nanotube central yarn had a density of about 0.7 g/cm³.

Then a plurality of carbon nanotube winding yarns were drawn from the carbon nanotube array of the second carbon nanotube-supporting body and were spirally wound around the circumference of the carbon nanotube central yarn.

Accordingly, a carbon nanotube fiber which comprises a carbon nanotube central yarn around which about 100 layers of a carbon nanotube winding yarn are stacked was obtained. The carbon nanotube fiber had a diameter of about 50 µm to 55 µm. The carbon nanotube fiber had a density of about 0.8 g/cm³.

### Comparative Example 1

A carbon nanotube-supporting body comprising a carbon nanotube array having a length in the longitudinal direction (the predetermined direction) of 200 mm and a width in the lateral direction of 30 mm was prepared by using a method similar to the method used in Example 1.

Then a plurality of carbon nanotube untwisted yarns were drawn from the carbon nanotube array of the carbon nanotube-supporting body and were bundled and twisted to obtain a carbon nanotube fiber. The twisted carbon nanotube fiber had a diameter of about 30 µm to 33 µm. The carbon nanotube fiber had a density of about 0.6 g/cm³.

### Comparative Example 2

A carbon nanotube-supporting body comprising a carbon nanotube array having a length in the longitudinal direction (the predetermined direction) of 200 mm and a width in the lateral direction of 60 mm was prepared by using a method similar to the method used in Example 1.

Then a plurality of carbon nanotube untwisted yarns were drawn from the carbon nanotube array of the carbon nanotube-supporting body and were bundled to obtain a carbon nanotube fiber. The carbon nanotube fiber had a diameter of about 50 µm to 53 µm. The carbon nanotube fiber had a density of about 0.6 g/cm³.

### Evaluation:

The carbon nanotube fiber obtained in Example 1 had a breaking strength of 350mN to 400mN. The breaking strength was confirmed to be improved by about 20% compared to that of the carbon nanotube fiber obtained in Comparative Example 1 (having a breaking strength of 240mN to 320mN).

The carbon nanotube fiber obtained in Example 2 had a breaking strength of 600mN to 700mN. The breaking strength was confirmed to be improved by about 20% compared to that of the carbon nanotube fiber obtained in Comparative Example 2 (having a breaking strength of 490mN to 600mN).

Incidentally, the breaking strengths of the carbon nanotube fibers were measured by a uniaxial tensile strength testing machine.

The results are shown in Table 1.

**Table 1**

| | Diameter | Density | Breaking Strength |
|---|---|---|---|
| | [µm] | [g/cm³] | [mN] |
| Example 1 | 30-35 | 0.9 | 350-400 |
| Example 2 | 50-55 | 0.8 | 600-700 |
| Comparative Example 1 | 30-33 | 0.6 | 240-320 |
| Comparative Example 2 | 50-53 | 0.6 | 490-600 |

### Example 3

A silicon dioxide film was stacked on a stainless steel substrate, and then iron was vapor-evaporated as a catalyst layer on the silicon dioxide film.

Next, the substrate was heated to a predetermined temperature, and then source gas (acetylene gas) was supplied to the catalyst layer. Thereby a carbon nanotube array was formed on the substrate. In the carbon nanotube array, a plurality of carbon nanotubes extended such that they were substantially parallel to each other and were oriented orthogonally (oriented perpendicularly) to the substrate. The plurality of carbon nanotubes had an average outer diameter of about 12 nm. The carbon nanotubes had an average length of about 300 µm. The carbon nanotube in the carbon nanotube array had a bulk density of about 30mg/cm³.

Next, a copper wire (a core material) having an outer diameter of 50 µm was prepared.

Then a plurality of carbon nanotube untwisted yarns were collectively drawn from the carbon nanotube array. The plurality of carbon nanotube untwisted yarns were arrayed in parallel along a direction orthogonal to the feeding direction of the carbon nanotube untwisted yarn and thereby substantially form a sheet shape.

Next, the plurality of carbon nanotube untwisted yarns were wound around a copper wire (a core material) such that ten layers of the untwisted yarns were stacked on the circumference of the copper wire (the core material) to prepare a composite fiber precursor.

Next, the composite fiber precursor was heated to 1,200°C in a heating furnace under an argon atmosphere.

Thereby a carbon nanotube composite fiber in which the copper wire (core material) and the carbon nanotube untwisted yarn were complexed together was obtained.

### Example 4

A plurality of carbon nanotube untwisted yarns prepared by a method similar to the method used in Example 3 were wound around a polyester wire rod (a core material) having an outer diameter of 1 mm such that ten layers of an untwisted yarn were stacked on the circumferential surface of the polyester wire rod (the core material) to prepare a composite fiber precursor.

Next, the composite fiber precursor was heated to 300 °C in a heating furnace under an argon atmosphere.

Thereby a carbon nanotube composite fiber in which the polyester wire rod (the core material) and the carbon nanotube untwisted yarn are complexed together was obtained.

### Example 5

A plurality of carbon nanotube untwisted yarns which were prepared by a method similar to the method used in Example 3 were pretreated by vapor-depositing copper (a metal) to them. Next, the plurality of pretreated carbon nanotube untwisted yarns were wound around a copper wire (a core material) having an outer diameter of 50 µm such that ten layers of the pretreated carbon nanotube untwisted yarns were stacked on the circumferential surface of the copper wire (the core material) to prepare a composite fiber precursor.

Next, the composite fiber precursor was heated to 1,200 °C in a heating furnace under an argon atmosphere.

Thereby a carbon nanotube composite fiber in which a copper wire (a core material) and a carbon nanotube untwisted yarn are complexed together was obtained.

### Evaluation:

The respective carbon nanotube composite fibers obtained in Examples 3 and 4 were confirmed to have a strength improved by 30% compared to a copper wire having an outer diameter of 50 µm.

The carbon nanotube composite fiber obtained in Example 5 was confirmed to have a strength improved by 50% compared to a copper wire having an outer diameter of 50 µm.

The strength of the carbon nanotube composite fibers were measured by a uniaxial tensile strength testing machine.

Incidentally, the above-described invention has been provided as embodiments of the present invention, but is merely an example. The above-described invention may not be construed as limiting the present invention. Modified embodiments of the present invention which are obvious for a person skilled in the art are included in the scope of the claims.

### INDUSTRIAL APPLICABILITY

The method for manufacturing a carbon nanotube fiber of the present invention may be conveniently used to manufacture a carbon nanotube fiber which is used for various industrial products.

### LIST OF REFERENCE NUMERALS

- 1: Carbon nanotube fiber
- 2: Carbon nanotube central yarn
- 3: Carbon nanotube untwisted yarn
- 8: Substrate
- 11: Catalyst layer
- 12: Carbon nanotube
- 13: Carbon nanotube array
- 20: Fiber-manufacturing apparatus
- 21: Central yarn-supplying part
- 22: Collecting part
- 23: Winding-yarn-supplying part
- 101: Carbon nanotube composite fiber
- 102: Core material
- 120: Composite-fiber-manufacturing apparatus
- 121: Feeding part
- 122: Collecting part
- 123: Supplying part
- 124: Heating part

## Claims

1. A method for manufacturing a carbon nanotube fiber, the method comprising the steps of:
preparing a core material extending in a predetermined direction;
preparing a carbon nanotube array comprising a plurality of carbon nanotubes aligned on a substrate and oriented vertically to the substrate;
drawing from the carbon nanotube array a carbon nanotube untwisted yarn comprising the plurality of continuously connected carbon nanotubes; and
winding the carbon nanotube untwisted yarn around the core material.

2. The method for manufacturing a carbon nanotube fiber according to claim 1, wherein the step for preparing the core material comprises the steps of:
preparing a carbon nanotube array comprising a plurality of carbon nanotubes aligned on a substrate and oriented vertically to the substrate; and
preparing a carbon nanotube central yarn as the core material by drawing from the carbon nanotube array a plurality of carbon nanotube untwisted yarns each comprising a plurality of continuously connected carbon nanotubes, and then bundling the plurality of carbon nanotube untwisted yarns.

3. The method for manufacturing a carbon nanotube fiber according to claim 2, wherein in the step of preparing a carbon nanotube central yarn, the carbon nanotube central yarn is prepared as a twisted yarn by twisting the plurality of carbon nanotube untwisted yarns.

4. The method for manufacturing a carbon nanotube fiber according to claim 3, wherein in the step of winding the carbon nanotube untwisted yarn around the carbon nanotube central yarn, the carbon nanotube untwisted yarn is wound around the carbon nanotube central yarn such that the carbon nanotube untwisted yarn is extending along a twist direction of the carbon nanotube central yarn.

5. The method for manufacturing a carbon nanotube fiber according to claim 2, wherein the step of preparing the carbon nanotube array comprises the steps of:
locating a catalyst layer on the substrate; and
growing the plurality of carbon nanotubes from the catalyst layer by supplying a source gas to the substrate.

6. The method for manufacturing a carbon nanotube fiber according to claim 2, wherein in the step of winding the carbon nanotube untwisted yarn around the carbon nanotube central yarn, a plurality of carbon nanotube untwisted yarns are drawn from the carbon nanotube array, and then at least two carbon nanotube untwisted yarns of the plurality of carbon nanotube untwisted yarns are spirally wound around the carbon nanotube central yarn such that twist directions of said at least two carbon nanotube untwisted yarns are different from each other.

7. The method for manufacturing a carbon nanotube fiber according to claim 2, wherein in the step of preparing a carbon nanotube central yarn, a volatile organic solvent is applied to the carbon nanotube central yarn.

8. The method for manufacturing a carbon nanotube fiber according to claim 2, wherein in the step of winding the carbon nanotube untwisted yarn around the carbon nanotube central yarn, the carbon nanotube central yarn and the carbon nanotube untwisted yarn are each immersed in a metal-containing solution containing a metal and then dried, or a metal is vapor-deposited on both the carbon nanotube central yarn and the carbon nanotube untwisted yarn, before the carbon nanotube untwisted yarn is wound around the carbon nanotube central yarn.

9. The method for manufacturing a carbon nanotube fiber according to claim 2, wherein in the step of winding the carbon nanotube untwisted yarn around the carbon nanotube central yarn, the carbon nanotube central yarn and the carbon nanotube untwisted yarn are each stacked on a film comprising a macromolecular material or are each immersed in a macromolecule-containing solution containing a macromolecular material and then dried, or a macromolecular solution in which a macromolecular material is dissolved is electrospinned on both the carbon nanotube central yarn and the carbon nanotube untwisted yarn, before the carbon nanotube untwisted yarn is wound around the carbon nanotube central yarn.

10. The method for manufacturing a carbon nanotube fiber according to claim 8, further comprising a step of heating the carbon nanotube central yarn around which the carbon nanotube untwisted yarn is wound.

11. The method for manufacturing a carbon nanotube fiber according to claim 2, wherein in the step of winding the carbon nanotube untwisted yarn around the carbon nanotube central yarn, the carbon nanotube central yarn and the carbon nanotube untwisted yarn are each surface-treated by a UV treatment or a plasma treatment, before the carbon nanotube untwisted yarn is wound around the carbon nanotube central yarn.

12. An apparatus for manufacturing a carbon nanotube fiber, the apparatus comprising:
a first supplying part for supplying a carbon nanotube central yarn which comprises a plurality of bundled carbon nanotube untwisted yarns and extends in a predetermined direction;
a collecting part which is located at a distance to the first supplying part in the predetermined direction and is configured to collect the carbon nanotube central yarn supplied from the first supplying part; and
a second supplying part for supplying a carbon nanotube untwisted yarn to the carbon nanotube central yarn located between the first supplying part and the collecting part,
wherein the first supplying part or the collecting part can rotate around an axis line along the predetermined direction as its rotational center.

13. A carbon nanotube fiber, comprising:
a carbon nanotube central yarn comprising a plurality of bundled carbon nanotube untwisted yarns each comprising a plurality of continuously connected carbon nanotubes; and
a carbon nanotube untwisted yarn wound around the carbon nanotube central yarn.

14. The method for manufacturing a carbon nanotube fiber according to claim 1, the method further comprising heating the core material around which the carbon nanotube untwisted yarn is wound to prepare the carbon nanotube fiber as a carbon nanotube composite fiber.

15. The method for manufacturing a carbon nanotube fiber according to claim 14, wherein the step of preparing a carbon nanotube array comprises the steps of:
locating a catalyst layer on the substrate; and
growing a plurality of carbon nanotubes from the catalyst layer by supplying a source gas to the substrate.

16. The method for manufacturing a carbon nanotube fiber according to claim 14, wherein the core material is made of a metal, and wherein in the step for preparing a carbon nanotube untwisted yarn, the carbon nanotube untwisted yarn is immersed in a metal-containing solution containing a metal and then is dried, or a metal is vapor-deposited on the carbon nanotube untwisted yarn.

17. The method for manufacturing a carbon nanotube fiber according to claim 14, wherein the core material is made of a macromolecular material, wherein in the step of preparing a carbon nanotube untwisted yarn, the carbon nanotube untwisted yarn is stacked on a film made of a macromolecular material, or the carbon nanotube untwisted yarn is immersed in a macromolecule-containing solution containing a macromolecular material and then is dried, or a macromolecular solution in which a macromolecular material is dissolved is electrospinned to the carbon nanotube untwisted yarn.

18. An apparatus for manufacturing a carbon nanotube fiber, the apparatus comprising:
a feeding part which is configured to feed a core material in a predetermined direction and can rotate around an axis line along the predetermined direction as its rotational center;
a collecting part which is located at a distance to the feeding part in the predetermined direction and is configured to collect the core material fed from the feeding part, and can rotate around an axis line along the predetermined direction as its rotational center;
a supplying part for supplying a carbon nanotube untwisted yarn to the core material located between the feeding part and the collecting part; and
a heating part which is configured to heat a core material around which a carbon nanotube untwisted yarn is wound by rotation of the feeding part and the collecting part.

19. A carbon nanotube fiber, comprising:
a core material extending in a predetermined direction; and
a carbon nanotube untwisted yarn comprising a plurality of continuously connected carbon nanotubes, wherein the carbon nanotube untwisted yarn is wound around the core material.
